(19) Europäisches Patentamt
European Patent Office
Office européen des brevets

(11) **EP 2 614 970 A1**

(12) **EUROPEAN PATENT APPLICATION**
published in accordance with Art. 153(4) EPC

(43) Date of publication:
**17.07.2013 Bulletin 2013/29**

(21) Application number: **10848130.0**

(22) Date of filing: **10.09.2010**

(51) Int Cl.:
***B60G 17/0165*** *(2006.01)* ***B60G 17/00*** *(2006.01)*

(86) International application number:
**PCT/JP2010/065634**

(87) International publication number:
**WO 2012/032655 (15.03.2012 Gazette 2012/11)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicant: **Toyota Jidosha Kabushiki Kaisha**
**Aichi 471-8571 (JP)**

(72) Inventor: **KAMIMURA, Ichisei**
**Toyota-shi**
**Aichi 471-8571 (JP)**

(74) Representative: **Winter, Brandl, Fürniss, Hübner, Röss, Kaiser, Polte - Partnerschaft**
**Alois-Steinecker-Strasse 22**
**85354 Freising (DE)**

(54) **SUSPENSION SYSTEM**

(57) When a preview sensor 65 acquires undulation information regarding a convex portion of a road surface, an electric actuator 30 expands during a predetermined period of time between that point and a point immediately before the wheel rides on the convex portion, whereby ascending velocity of a sprung member increase. Therefore, when the wheel rides on the convex portion, the sprung member reaches estimated unsprung ascending velocity Vdp as a result of the expansion of the electric actuator 30 up to that point. Accordingly, in the case where the wheel rides on the convex portion and an unsprung member is pushed up, a change in the sprung vertical velocity caused by application of the pushing up force to the sprung member is reduced because the sprung member ascends at the estimated unsprung ascending velocity Vdp. Therefore, riding quality is improved.

FIG.12

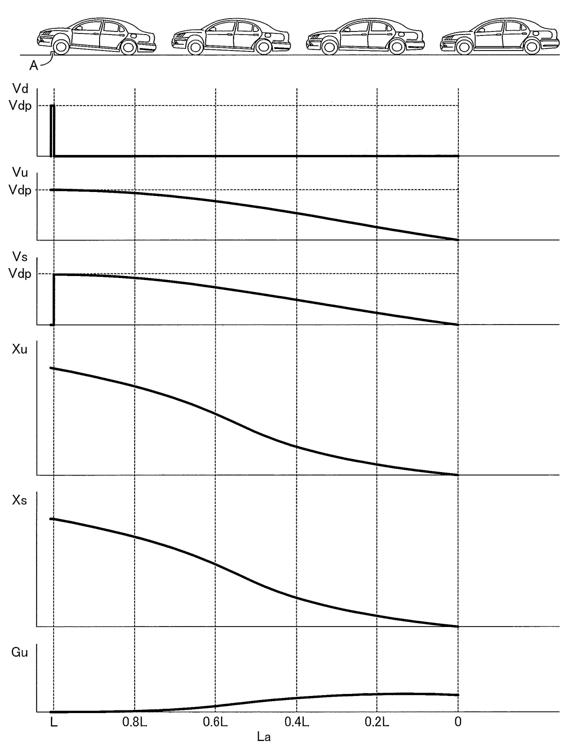


EP 2 614 970 A1

**Description**

TECHNICAL FIELD

The present invention relates to a suspension apparatus for a vehicle. More particularly, the present invention relates to an active suspension apparatus which comprises an actuator disposed between a sprung member and an unsprung member of a vehicle, and adapted to change the distance between the sprung member and the unsprung member through expansion and contraction; an undulation information acquisition apparatus which acquires undulation information representing undulation of a road surface ahead of the vehicle when the vehicle is traveling; and an actuator control apparatus which controls the actuator on the basis of the undulation information acquired by the undulation information acquisition apparatus.

BACKGROUND ART

There has been known an active suspension apparatus which comprises an actuator disposed between a sprung member and an unsprung member of a vehicle, and adapted to change the distance between the sprung member and the unsprung member through expansion and contraction; a preview sensor for detecting undulation information representing undulation of a road surface ahead of the vehicle when the vehicle is traveling; and an actuator control apparatus which controls the actuator on the basis of the undulation information acquired by the preview sensor.

Japanese Patent Application Laid-Open *(kokai)* No. H4-254211 discloses a suspension apparatus configured as follows. When a preview sensor detects an uneven portion of a road surface ahead of a vehicle, the suspension apparatus controls a hydraulic actuator provided between a sprung member and an unsprung member on the front wheel side such that the suspension characteristic at the time when the front wheels pass over the uneven portion becomes soft. Moreover, when the rear wheels pass over the uneven portion, the suspension apparatus disclosed in this publication controls a hydraulic actuator provided between the sprung member and an unsprung member on the rear wheel side on the basis of input information representing a vibration generated when the front wheels pass over the uneven portion.

Japanese Patent Application Laid-Open *(kokai)* No. H4-19214 discloses a suspension apparatus configured as follows. When a preview sensor detects an obstacle ahead of a vehicle, the suspension apparatus controls an actuator interposed between a sprung member and an unsprung member connected to a wheel so as to raise the wheel when the wheel passes over the obstacle.

PRIOR ART DOCUMENTS

PATENT DOCUMENTS

Patent Document 1: Japanese Patent Application Laid-Open (*kokai*) No. H4-254211

Patent Document 2: Japanese Patent Application Laid-Open (*kokai*) No. H4-19214

SUMMARY OF THE INVENTION

PROBLEMS TO BE SOLVED BY THE INVENTION

In general, such a conventional active suspension apparatus-which controls an actuator interposed between a sprung member and an unsprung member on the basis of undulation information representing undulation of a road surface detected by a preview sensor-controls the actuator such that the wheels accurately follow the undulation of the road surface detected by the preview sensor. By virtue of such control, when the undulation of the road surface is mild, the actuator slowly expands and contracts in accordance with the undulation, whereby the undulation of the road surface is absorbed by the expansion and contraction of the actuator. Thus, vibration of the sprung member side (the vehicle body side) is restrained. That is, in such a conventional active suspension apparatus, the actuator is controlled such that riding quality is improved when a low-frequency road surface input is applied to the vehicle.

However, in the case where a wheel rides on a convex portion (bump or the like) of a road surface; that is, in the case where a high-frequency road surface input is applied to the vehicle, due to control delay or the like, the wheel and the unsprung member are pushed up when the wheel rides on the convex portion. As a result of being pushed upward, the velocity of the unsprung member along a vertical direction (unsprung vertical velocity) changes greatly. Furthermore, since the vertical velocity of the unsprung member generated as a result of the wheel riding on the convex portion is transmitted to the sprung member, the sprung member is also pushed upward, whereby the velocity of the sprung member along the vertical direction (sprung vertical velocity) changes greatly. Furthermore, immediately after that, the actuator contracts such that the wheel avoids the convex portion. When the actuator contracts, the sprung member is pulled by the actuator, so the sprung member descends. As a result of the descending of the sprung member, the sprung vertical velocity changes greatly. The change in the sprung vertical velocity represents an acceleration acting on the sprung member in the vertical direction (sprung vertical acceleration). That is, the conventional active suspension apparatus has a problem in that, when a wheel rides on a convex portion of a road surface (when a high-frequency road surface input is applied to the vehicle), the sprung vertical acceleration increases, which deteriorates riding quality.

An object of the present invention is to provide a suspension apparatus which controls an actuator disposed between a sprung member and an unsprung member so as to improve riding quality at the time when a wheel rides on a convex portion of a road surface.

MEANS FOR SOLVING THE PROBLEMS

A suspension apparatus of the present invention comprises an actuator disposed between a sprung member of a vehicle and an unsprung member connected to a wheel and adapted to change the distance between the sprung member and the unsprung member through expansion and contraction thereof; an undulation information acquisition apparatus which acquires undulation information of a road surface ahead of the vehicle when the vehicle is traveling; and an actuator control apparatus which controls the actuator on the basis of the undulation information acquired by the undulation information acquisition apparatus. The actuator control apparatus includes a convex portion ride-on control section for controlling the actuator when the undulation information acquisition apparatus acquires undulation information regarding a convex portion of the road surface. The convex portion ride-on control section controls the actuator during a predetermined period of time between a point at which the undulation information acquisition apparatus acquires the undulation information regarding the convex portion and a point immediately before the wheel rides on the convex portion, such that ascending velocity of the sprung member increases as a result of expansion of the actuator over the predetermined period of time, and reaches a predetermined ascending velocity before the wheel rides on the convex portion.

According to the suspension apparatus of the present invention, when the undulation information acquisition apparatus acquires undulation information regarding a convex portion of a road surface, during a predetermined period of time between that point in time and a point immediately before the wheel rides on the convex portion, the actuator expands, whereby the ascending velocity of the sprung member increases. Thus, when the wheel rides on the convex portion, the ascending velocity of the sprung member reaches the predetermined ascending velocity as a result of the expansion of the actuator up to that point. Therefore, in the case where the wheel rides on the convex portion and the unsprung member is pushed up, a change in the sprung vertical velocity caused by the pushing up force acting on the sprung member is reduced, because the sprung member ascends at the predetermined ascending velocity. Since the change in the sprung vertical velocity (sprung vertical acceleration) is reduced, riding quality is improved.

Preferably, the convex portion ride-on control section controls the actuator during the predetermined period of time before the wheel rides on the convex portion, such that the ascending velocity of the sprung member increases gradually in the predetermined period of time. Also, preferably, the predetermined period of time is a previously set period. The predetermined period of time may be a portion or the entirety of a period of time starting at the point at which the undulation information acquisition apparatus acquires undulation information regarding the convex portion of the road surface, and ending at the point at which the wheel rides on the convex portion. Preferably, the end of the predetermined period of time is the point immediately before the wheel rides on the convex portion.

Preferably, the convex portion ride-on control section controls the actuator such that, when the wheel rides on the convex portion, the magnitude of a relative velocity which is the difference between the ascending velocity of the sprung member and the ascending velocity of the unsprung member becomes equal to a velocity represented by the difference between the predetermined ascending velocity and an ascending velocity of the unsprung member generated as a result of the wheel riding on the convex portion. Moreover, in this case, preferably, the convex portion ride-on control section controls the actuator such that the magnitude of the relative velocity becomes zero when the wheel rides on the convex portion.

As described above, when the wheel rides on the convex portion, the sprung member ascends at the predetermined ascending velocity because of expansion of the actuator up to that point. Also, the unsprung member is pushed up as a result of the wheel riding on the convex portion. Therefore, in the case where the sprung member is ascended through drive of the actuator even when the wheel rides on the convex portion, the vertical speed of the unsprung member generated as a result of the wheel riding on the convex portion is transmitted to the sprung member. Therefore, a change in the sprung vertical velocity between the periods before and after the point at which the wheel rides on the convex portion becomes large. In contrast, according to the present invention, the actuator is controlled such that, when the wheel rides on the convex portion, the difference (relative velocity) between the ascending velocity of the sprung member and the ascending velocity of the unsprung member becomes equal to a velocity represented by the difference between the ascending velocity of the sprung member generated as a result of the expansion of the actuator up to that point, and an ascending velocity of the unsprung member generated as a result of the wheel riding on the convex portion. That is, according to the control of the present invention, the actuator is controlled such that, when the wheel rides on the convex portion, the ascending velocity of the unsprung member generated as a result of the wheel riding on the convex portion is hardly transmitted from the unsprung member side to the sprung member side. By virtue of such a control, when the wheel rides on the convex portion, the ascending velocity of the sprung member is maintained at the ascending velocity generated as a result of expansion of the electric actuator up to that time. Therefore, a change in the sprung vertical velocity at the time when the wheel rides on the convex portion is reduced, whereby riding quality is improved.

Moreover, in the case where the relative velocity is zero when the wheel rides on the convex portion, the sprung member and the unsprung member ascend at the same velocity. Thus, the ascending velocity of the unsprung member does not affect the change in the ascending velocity of the sprung member. Therefore, the change in the sprung vertical velocity at the time when the wheel rides on the convex portion is reduced, whereby riding quality is improved.

Preferably, the actuator control apparatus includes an unsprung ascending velocity estimation section for estimating, on the basis of the undulation information regarding the convex portion, the ascending velocity of the unsprung member generated as a result of the wheel riding on the convex portion. In this case, preferably, the convex portion ride-on control section controls the actuator, on the basis of the ascending velocity of the unsprung member estimated by the unsprung ascending velocity estimation section, during the predetermined period of time such that ascending velocity of the sprung member increases as a result of expansion of the actuator during the predetermined period of time, and reaches a predetermined ascending velocity before the wheel rides on the convex portion.

In this case, preferably, the predetermined ascending velocity is a previously set velocity which is close to the ascending velocity of the unsprung member estimated by the unsprung ascending velocity estimation section. The closer the predetermined ascending velocity to the ascending velocity of the unsprung member estimated by the unsprung ascending velocity estimation section, the better the results attained. In particular, preferably, the predetermined ascending velocity is a velocity equal to the ascending velocity of the unsprung member estimated by the unsprung ascending velocity estimation section.

By virtue of the above-described configuration, the following action can be realized. Through control of the actuator by the convex portion ride-on control section, when the wheel rides on the convex portion, the sprung member is ascending at a velocity close to or equal to the ascending velocity of the unsprung member estimated by the unsprung ascending velocity estimation section. Thus, the magnitude of the relative velocity at the time when the wheel rides on the convex portion is decreased (to zero). Therefore, the sprung vertical acceleration at the time when the wheel rides on the convex portion decreases, whereby riding quality is improved.

Furthermore, preferably, the convex portion ride-on control section controls the actuator such that a vibration frequency of the ascending velocity of the sprung member in a period between a point at which the actuator starts to expand and a point at which the wheel rides on the convex portion becomes equal to or less than a sprung resonance frequency. By virtue of this configuration, during a period between a point at which the actuator starts to expand and a point at which the wheel rides on the convex portion, the sprung vertical velocity changes slowly at a frequency equal to or lower than the sprung resonance frequency (e.g., 1 Hz). Therefore, the change in the sprung vertical velocity in the period between the point at which the actuator starts to expand and the point at which the wheel rides on the convex portion becomes small. Therefore, riding quality before the wheel rides on the convex portion is improved.

Notably, the vibration frequency of the ascending velocity of the sprung member refers to the frequency of a periodic function which represents a change, with time, in the ascending velocity of the sprung member in the period between the point at which the actuator starts to expand through the control of the present invention, and the point at which the wheel rides on the convex portion. For example, in the case where the change in the ascending velocity of the sprung member with time can be approximated by a sinusoidal curve, the vibration frequency of the ascending velocity of the sprung member is the frequency of the sinusoidal curve. Also, the period between the point at which the actuator starts to expand and the point at which the wheel rides on the convex portion is a period in which the ascending velocity of the sprung member increases, and represents a 1/4 period ($\pi/2$) of the periodic function. Therefore, in the case where the sprung resonance frequency is 1 Hz, if the period between the point at which the actuator starts to expand and the point at which the wheel rides on the convex portion is equal to or greater than 0.25 sec., the condition that the vibration frequency of the ascending velocity of the sprung member is equal to or greater than the sprung resonance frequency is satisfied.

Furthermore, preferably, the convex portion ride-on control section controls the actuator such that the actuator generates a driving force during the predetermined period of time before the wheel rides on the convex portion, and controls the actuator such that the actuator generates no driving force and substantially no resistance force against external input when the wheel rides on the convex portion.

By virtue of this configuration, the following action is realized. Since the actuator generates a driving force and expands during the predetermined period of time before the wheel rides on the convex portion, when the wheel rides on the convex portion, the sprung member is ascending at a predetermined ascending velocity as a result of expansion of the actuator up to that point. Also, since the actuator is controlled such that the actuator generates neither driving force nor resistance force (damping force) when the wheel rides on the convex portion, the ascending velocity of the unsprung member generated as a result of the wheel riding on the convex portion is prevented from being transmitted to the sprung member side. Therefore, when the wheel rides on the convex portion, the magnitude of the relative velocity which is the difference between the ascending velocity of the sprung member and the ascending velocity of the unsprung member is represented by the difference between the predetermined ascending velocity and the ascending velocity of the unsprung member generated as a result of the wheel riding on the convex portion. Accordingly, the change in the sprung vertical velocity at the time when the wheel rides on the convex portion can be reduced, whereby riding quality is improved. In particular, in the case where the predetermined ascending velocity is equal to the ascending velocity of the unsprung member generated as a result of the wheel riding on the convex portion, the relative velocity at the time when the wheel rides on the convex portion becomes zero. Therefore, the change in the sprung vertical velocity is reduced further, whereby riding quality is improved.

Furthermore, preferably, the actuator is an electric actuator which operates upon supply of electricity thereto. In this case, preferably, the convex portion ride-on control section supplies electricity to the electric actuator during the predetermined period of time so as to drive the electric actuator such that the ascending velocity of the sprung member increases gradually, and interrupts the supply of electricity to the electric actuator when the wheel rides on the convex portion.

In this case, preferably, the electric actuator includes an electric motor which rotates upon supply of electricity thereto, and a conversion mechanism for converting rotational motion of the electric motor to rectilinear motion. In this case, preferably, the convex portion ride-on control section supplies electricity to the electric motor during the predetermined period of time so as to drive the electric actuator such that the ascending velocity of the sprung member increases gradually, and interrupts the supply of electricity to the electric motor when the wheel rides on the convex portion.

By virtue of this configuration, as a result of the supply of electricity to the electric motor during the predetermined period of time immediately before the wheel rides on the convex portion, the electric motor rotates, and the conversion mechanism moves rectilinearly. As a result of the rectilinear movement of the conversion mechanism, the actuator expands such that the ascending velocity reaches the predetermined ascending velocity before the wheel rides on the convex portion. Furthermore, since the supply of electricity to the electric motor is interrupted when the wheel rides on the convex portion, the electric motor enters a free state (a state in which the electric moor does not generate any driving force, and hardly generates damping force (resisting force) against external input). In the case where the electric motor generates neither driving force nor damping force, the vertical velocity of the unsprung member generated as a result of the wheel riding on the convex portion is hardly transmitted to the sprung member. Therefore, the change in the sprung vertical velocity at the time when the wheel rides on the convex portion is reduced, whereby riding quality is improved. Moreover, since the sprung member is ascending when the wheel rides on the convex portion, it is possible to prevent the sprung member from descending, which would otherwise occur when the electric motor enters the free state.

In the case where, when the wheel rides on the convex portion, the electric motor enters the free state and the ascending velocity of the sprung member is equal to the ascending velocity of the unsprung member as a result of the wheel riding on the convex portion, the relative velocity becomes zero at the time when the wheel rides on the convex portion, and, as a result, the electric motor stops. Since the electric motor stops, the unsprung vertical velocity is not transmitted to the sprung member. Therefore, in this case, riding quality at the time when the wheel rides on the convex portion is improved further.

BRIEF DESCRIPTION OF THE DRAWINGS

[FIG. 1] FIG. 1 is a schematic diagram showing a suspension apparatus.

[FIG. 2] FIG. 2 is a schematic view showing a suspension main body.

[FIG. 3] FIG. 3 is a schematic cross sectional view showing the internal structure of an actuator.

[FIG. 4] FIG. 4 is a pair of diagrams showing an example method of detecting undulation information of road surface by use of a preview sensor.

[FIG. 5] FIG. 5 is diagram showing a configuration for controlling an electric motor by a suspension ECU and a drive circuit.

[FIG. 6] FIG. 6 is an illustration showing a geometrical relation among the irradiation angle of a laser beam, the height of a road surface, the mounting height of a preview sensor, and the distance between the preview sensor and a wheel as measured along a traveling direction.

[FIG. 7] FIG. 7 is a flowchart showing a routine executed by the suspension ECU so as to control the actuator.

[FIG. 8] FIG. 8 is an illustration showing a riding-on angle Θ.

[FIG. 9] FIG. 9 is a flowchart showing a convex portion ride-on control routine according to a first embodiment.

[FIG. 10] FIG. 10 is a table showing a distance-velocity map.

[FIG. 11] FIG. 11 is a graph representing the relation between target sprung ascending velocity Vu* and distance La obtained from the distance-velocity map.

[FIG. 12] FIG. 12 is a graph showing behavior of a vehicle, change in unsprung vertical velocity Vd, change in sprung vertical velocity Vu, change in stroke velocity Vs, change in sprung vertical displacement Xu, change in stroke displacement Xs, and change in sprung vertical acceleration Gu during a period from the start of convex portion ride-on control to a point when wheels ride on a convex portion A, for the case where the suspension ECU executes the convex portion ride-on control according to the first embodiment.

[FIG. 13] FIG. 13 is a flowchart showing a convex portion ride-on control routine according to a second embodiment.

[FIG. 14] FIG. 14 is a pair of tables showing a first map and a second map.

[FIG. 15] FIG. 15 is a graph showing behavior of a vehicle, change in unsprung vertical velocity Vd, change in sprung vertical velocity Vu, change in stroke velocity Vs, change in sprung vertical displacement Xu, change in stroke displacement Xs, and change in sprung vertical acceleration Gu during a period from the start of convex portion ride-on control to a point when wheels ride on a convex portion A, for the case where the suspension ECU executes the convex portion ride-on control according to the second embodiment.

MODES FOR CARRYING OUT THE INVENTION

Embodiments of the present invention will next be described. FIG. 1 is a schematic diagram showing a suspension apparatus according to a first embodiment of the present invention.

This suspension apparatus includes four suspension main bodies 10FR, 10FL, 10RR, 10RL, and a suspension ECU 50 for controlling operations of the suspension main bodies 10FR, 10FL, 10RR, 10RL. The four suspension main bodies 10FR, 10FL, 10RR, 10RL are interposed between a sprung member and corresponding unsprung members connected to respective wheels (right front wheel WFR, left front wheel WFL, right rear wheel WRR, left rear wheel WRL). In the following description, the four suspension main bodies 10FR, 10FL, 10RR, 10RL will be simply and collectively referred to as the suspension main body 10, and the wheels WFR, WFL, WRR, WRL will be simply and collectively referred to as the wheel W.

FIG. 2 is a schematic view of the suspension main body 10. As shown in FIG. 2, the suspension main body 10 includes a coil spring 20 and an electric actuator 30 disposed in parallel therewith. The coil spring 20 is interposed between a vehicle body B (sprung member) and a lower arm LA (unsprung member) connected to the wheel W, and is adapted to absorb shocks from road surface to thereby improve riding quality and to elastically support the vehicle body B. A member on the upper side of the coil spring 20; i.e., on the side toward the vehicle body B, will be referred to as a "sprung member," and a member on the lower side of the coil spring 20; i.e., on the side toward the wheel W, will be referred to as an "unsprung member."

FIG. 3 is a schematic cross sectional view showing the internal structure of the electric actuator 30. As shown in FIG. 3, the electric actuator 30 includes an electric motor 31, and a ball screw mechanism 35 for converting rotational motion of the electric motor 31 to rectilinear motion. The electric motor 31 includes a motor casing 311, a hollow rotation shaft 312, a permanent magnet 313, and a pole body 314. The motor casing 311 is formed into a cylindrical tubular shape, and constitutes an outer wall of the electric motor 31. The rotation shaft 312 is disposed inside the motor casing 311, and is rotatably supported by the motor casing 311 via a bearing 331. The permanent magnet 313 is fixed to the outer circumferential surface of the rotation shaft 312. The rotation shaft 312 and the permanent magnet 313 constitute a rotor of the electric motor 31. The pole body 314 (composed of a core and a coil wound around the core) is fixed to the inner circumferential surface of the motor casing 311 to face the permanent magnet 313. The motor casing 311 and the pole body 314 constitute a stator of the electric motor 31.

The ball screw mechanism 35 includes a ball screw rod 36, and a ball screw nut 38 in screw engagement with an external thread portion 37 formed on the ball screw rod 36. A rotation prevention mechanism 40 restricts rotation of the ball screw rod 36, while permitting its axial movement. The ball screw nut 38 is connected to the lower end of the rotation shaft 312 via an upper end surface thereof, and is supported by the motor casing 311 via a bearing 332 such that the ball screw nut 38 can rotate unitarily with the rotation shaft 312. Therefore, when the rotation shaft 312 rotates, its rotational driving force is transmitted to the ball screw nut 38. The rotational motion of the ball screw nut 38 is converted to rectilinear motion of the ball screw rod 36.

Furthermore, as shown in FIG. 2, a mounting bracket 41 is connected to the motor casing 311 of the electric motor 31. An upper support 42, which is formed from an elastic material and is connected to the vehicle body B, is attached to the upper surface of the mounting bracket 41. The electric actuator 30 is elastically connected to the sprung member side via the upper support 42.

The electric actuator 30 expands and contracts through rectilinear motion of the ball screw rod 36 along the axial direction. Through expansion and contraction of the electric actuator 30, the distance between the sprung member and the unsprung member is changed. Notably, an unillustrated stopper restricts the expansion and contraction of the electric actuator 30. Therefore, the electric actuator 30 expands and contracts within a range restricted by the stopper.

The coil spring 20 is interposed between an annular retainer 43 provided on the outer circumferential surface of the ball screw rod 36 connected to the unsprung member (the lower arm LA), and the mounting bracket 41 connected to the sprung member (the vehicle body B).

As shown in FIG. 1, a plurality of sprung vertical acceleration sensors 61, a plurality of unsprung vertical acceleration sensors 62, a plurality of stroke sensors 63, a vehicle speed sensor 64, and preview sensors 65R, 65L are attached to the vehicle. Each sprung vertical acceleration sensor 61 is attached to the sprung member to be located near a position where the corresponding suspension main body 10 is attached, and detects acceleration (sprung vertical acceleration) Gu which acts on the sprung member in the vertical direction at that position.

Each unsprung vertical acceleration sensor 62 is attached to the unsprung member connected to the corresponding suspension main body 10, and detects acceleration (unsprung vertical acceleration) Gd acting on the unsprung member in the vertical direction at that position. Each stroke sensor 63 is attached in the vicinity of the corresponding suspension main body 10, and detects the amount of expansion and contraction (stroke amount) Xs of the corresponding electric actuator 30. The vehicle speed sensor 64 detects the speed V of the vehicle.

The preview sensor 65R detects (acquires) information regarding an undulation of a front road on which the right wheel runs when the vehicle travels, and outputs the detected undulation information to the suspension ECU 50. The preview sensor 65L detects (acquires) information regarding an undulation of a front road on which the left wheel runs when the vehicle travels, and outputs the detected undulation information to the suspension ECU 50. In the following description, the preview sensors 65R, 65L will be collectively referred to as the preview sensor 65 when they are not required to be distinguished from each other.

FIG. 4 is a pair of illustrations showing an example method of detecting undulation information of a road surface by use of the preview sensor 65. As shown in FIG. 4, the preview sensor 65 includes an emission section 651 for emitting a laser beam; a light reception section 652 for receiving reflection light of the laser beam emitted from the emission section 651; and a computation section 653 for computing undulation information of a road surface on the basis of the reflection light received by the light reception section 652.

FIG. 4(a) shows a state in which a point P1 of a road surface R is irradiated with a laser beam emitted from the emission section 651 of the preview sensor 65. Refection light of the laser beam emitted to the point P1 is received by the light reception section 652. The incident angle of the reflection light which impinges onto the light reception section 652 is represented by $\alpha 1$.

FIG. 4(b) shows a state in which the top (point P2) of a convex portion A formed on the road surface R and having a height H is irradiated with the laser beam emitted from the emission section 651 of the preview sensor 65. Refection light of the laser beam emitted to the point P2 is received by the light reception section 652. The incident angle of the reflection light which impinges onto the light reception section 652 is represented by $\alpha 2$.

As can be understood from comparison between FIGS. 4(a) and 4(b), the magnitude of the incident angle of the reflection light impinging onto the light reception section 652 changes depending on the height of the point irradiated with the laser beam. The computation section 653 receives the incident angle of the reflection light impinging onto the light reception section 652, and computes the height of the point irradiated with the laser beam on the basis of the received incident angle.

In FIG. 4, the traveling direction of the vehicle is represented by an X axis, the width direction of the vehicle is represented by a Y axis, and the height direction is represented by a Z axis. The preview sensor 65 can compute undulation information of a road surface on which the wheel runs, while scanning the road surface in the y direction with the laser beam, or irradiating the road surface with a light beam extending in the y direction. Notably, since the technique of detecting undulation information of a road surface by use of a preview sensor is known, other methods may be used so as to detect undulation information of a road surface by making use of a preview sensor.

As shown in FIG. 1, the sprung vertical acceleration sensors 61, the unsprung vertical acceleration sensors 62, the stroke sensors 63, the vehicle speed sensor 64, and the preview sensor 65 are electrically connected to the suspension ECU 50, whereby detection signals from the sensors are fed to the suspension ECU 50. The suspension ECU 50 is electrically connected to a drive circuit 70 provided for each suspension main body 10. The electric motor 31 of the electric actuator 30 of each suspension main body 10 is controlled by the suspension ECU 50 via the corresponding drive circuit 70. Each drive circuit 70 is electrically connected to an electricity storage unit 110 such as a battery mounted on the vehicle.

FIG. 5 is a diagram showing a configuration for controlling the electric motor 31 by the suspension ECU 50 and the drive circuit 70. The drive circuit 70 constitutes a three-phase inverter circuit, and includes switching elements SW11, SW12, SW21, SW22, SW31, SW32, which correspond to three magnet coils CL1, CL2, CL3 of the electric motor 31 (in the present embodiment, a three-phase brushless motor). These switching elements are duty-controlled on the basis of control signals from the suspension ECU 50 (PWM control). Thus, the electric motor 31 is energized and controlled.

The suspension ECU 50 is composed of a microcomputer including a CPU, ROM, RAM, memory, etc. While the vehicle is traveling on a road surface, the suspension ECU 50 regularly acquires undulation information of the road surface detected by the preview sensor 65, and controls the electric actuator 30 on the basis of the acquired undulation information. The undulation information acquired by the suspension ECU 50 includes the height (road surface height) H of the point irradiated with the laser beam, and the distance L between the point irradiated with the laser beam and a wheel which passes through the point irradiated with the laser beam.

As described above, the computation section 653 computes the road surface height H on the basis of the angle (incident angle) at which reflection light of the laser beam emitted from the preview sensor 65 impinges onto the light reception section 652. As shown in FIG. 6, the distance L can be obtained, for example, through geometrical computation on the basis of the irradiation angle $\phi$ of the laser beam (known), the road surface height H, the mounting height D of the preview sensor 65 (known), and the distance X between the preview sensor 65 and the wheel W as measured along the traveling direction (known). The distance L is also computed by the computation section 653.

The suspension ECU 50 determines that the preview sensor 65 has detected (acquired) undulation information regarding a convex portion formed on a road surface, when the regularly acquired road surface height H changes; in particular, when the difference (H2 - H1) between the road surface height H1 acquired last time and the road surface height H2 acquired this time is greater than a previously set very small value. When the preview sensor 65 detects information regarding a convex portion of a road surface, the suspension ECU 50 executes a control routine shown in FIG. 7, to thereby control the electric actuator 30 disposed between the sprung member and the unsprung member connected to the wheel which will pass over the convex portion in the future.

FIG. 7 is a flowchart showing a routine which is executed by the suspension ECU 50, when the preview sensor 65 detects information regarding a convex portion of a road surface, in order to control the electric actuator 30. This control routine is independently executed for the electric actuator 30 of each suspension main body 10. Specifically, when the suspension ECU 50 determines that the preview sensor 65R has detected undulation information regarding a convex portion of a road surface, the suspension ECU 50 executes the routine of FIG. 7 in order to control the electric actuators 30 of the suspension main bodies 10FR and 10RR. Similarly, when the suspension ECU 50 determines that the preview sensor 65L has detected undulation information regarding a convex portion of a road surface, the suspension ECU 50 executes the routine of FIG. 7 in order to control the electric actuators 30 of the suspension main bodies 10FL and 10RL.

When this routine is started, in step (hereinafter, abbreviated to S) 10 of FIG. 7, the suspension ECU 50 acquires undulation information regarding the convex portion required for control of the electric actuator 30. This undulation information includes the road surface height H and the distance L.

Next, in S12, the suspension ECU 50 acquires the present vehicle speed V from the vehicle speed sensor 62. Subsequently, the suspension ECU 50 obtains a predicted arrival time T* by dividing the distance L by the vehicle speed V (S14). The predicted arrival time T* represents a time which the wheel requires to reach the point determined by the suspension ECU 50 to be a place where a convex portion is present, if the present vehicle speed V is maintained.

Next, the suspension ECU 50 determines whether or not the predicted arrival time T* is equal to or greater than a necessary time T0 (S16). The necessary time T0 is set in advance as a time necessary for completing the drive of the electric actuator 30 through the present control. In the present embodiment, preferably, the necessary time T0 is set to 1/(4f), where f represents the resonance frequency of the sprung member of the vehicle. For example, when the resonance frequency f of the sprung member is 1 Hz, the necessary time T0 is set to 0.25 sec. In the case where the predicted arrival time T* is less than the necessary time T0 (S16: No), the suspension ECU 50 ends the present routine.

In the case where the predicted arrival time T* is equal to or greater than the necessary time T0 (S16: Yes), the suspension ECU 50 proceeds to S18, and computes a ride-on angle $\Theta$. FIG. 8 is an illustration showing the ride-on angle $\Theta$. As shown in FIG. 8, in the case where a convex portion A having a height H is formed on a road surface R, when the wheel W rides on this convex portion A, the wheel W comes into contact with two points; i.e., a point on the convex portion A and a point on the road surface R. Here, the center of the wheel W is represented by O; the contact point between the wheel W and the convex portion A is represented by P; and the contact point between the wheel W and the road surface R is represented by Q. In such a case, the ride-on angle $\Theta$ is an angle $\angle POQ$ between a line OP and a line OQ.

In FIG. 8, the lengths of the line OP and the line OQ are equal to a dynamic load radius r of the wheel (tire) W (the radius of the wheel W as measured when the wheel W is rotating). The dynamic load radius r is known. Furthermore, the cosine of the ride-on angle $\Theta$ is represented by the following equation.

$$\cos\Theta = (r-H)/r$$

Therefore, the ride-on angle $\Theta$ is represented by the following equation.

$$\Theta=\cos^{-1}((r - H)/r)$$

The suspension ECU 50 computes the ride-on angle $\Theta$ on the basis of the above-mentioned equation.

After having computed the ride-on angle $\Theta$, in S20, the suspension ECU 50 computes an estimated unsprung ascending velocity Vdp. The estimated unsprung ascending velocity Vdp is an estimated value of unsprung vertical velocity generated as a result of the wheel riding on the convex portion. Notably, in the present specification, the term "ascending velocity" refers to an upward "vertical velocity."

In the case where the wheel W comes into contact with the convex portion A as shown in FIG. 8, the wheel W rides on the convex portion A, while rotating around the point P, which is the contact point between the wheel W and the convex portion A. At that time, the center O of the wheel W moves at the vehicle speed V in a direction perpendicular to the line OP. A vector OS in the drawing represents a velocity vector of the center O of the wheel W at the time when the wheel rides on the convex portion A. When this velocity vector OS is decomposed to a velocity component toward the heading direction of the vehicle (horizontal direction) and an upward velocity component, the magnitude of the upward velocity component is represented by $V\sin\Theta$. Therefore, the ascending velocity of the wheel at the time when the wheel rides on the convex portion A is represented by $V\sin\Theta$.

The ascending velocity of the wheel is transmitted to the unsprung member connected to the wheel. Therefore, the ascending velocity of the unsprung member (unsprung ascending velocity) generated as a result of the wheel riding on the convex portion A is represented by $V\sin\Theta$. The suspension ECU 50 computes the estimated unsprung ascending velocity Vdp by multiplying the vehicle speed V by $\sin\Theta$.

Next, the suspension ECU 50 determines in S22 whether or not the estimated unsprung ascending velocity Vdp is greater than a lower limit velocity Vdmin. The lower limit velocity Vdmin is set in advance as a threshold velocity used to determine whether or not the electric actuator 30 must be controlled when the wheel rides on the convex portion. In the case where the estimated unsprung ascending velocity Vdp is equal to or less than the lower limit velocity Vdmin (S22: No), the suspension ECU 50 determines that the electric actuator 30 is not required to be controlled when the wheel rides on the convex portion. In this case, the suspension ECU 50 ends the present routine.

In the case where the estimated unsprung ascending velocity Vdp is greater than the lower limit velocity Vdmin (S22: Yes), in S24, the suspension ECU 50 determines whether or not the estimated unsprung ascending velocity Vdp is less than an upper limit velocity Vdmax. The upper limit velocity Vdmax is set in advance as a threshold velocity used to determine whether or not convex portion ride-on control to be described later can reduce the sprung vertical acceleration when the wheel rides on the convex portion. In the case where the estimated unsprung ascending velocity Vdp is equal to or greater than the upper limit velocity Vdmax (S24: No), the suspension ECU 50 determines that the convex portion ride-on control cannot reduce the sprung vertical acceleration very much when the wheel rides on the convex portion. In this case, the suspension ECU 50 proceeds to S28, and provides a driver with a warning representing that if the traveling is continued, the vehicle body (the sprung member) will be pushed up greatly because of contact of the wheel with the convex portion. Upon receipt of this warning, the driver can stop the vehicle to thereby avoid the great pushing up of the vehicle body. Subsequently, the suspension ECU 50 ends the present routine.

Meanwhile, in the case where the estimated unsprung ascending velocity Vdp is less than the upper limit velocity Vdmax (S24: Yes), the suspension ECU 50 proceeds to S26, and controls the electric actuator 30 by executing the convex portion ride-on control.

FIG. 9 is a flowchart representing the convex portion ride-on control routine. When this routine is started, in S30 of the drawing, the suspension ECU 50 first acquires the present vehicle speed V from the vehicle speed sensor 62 every time a predetermined sampling time $\Delta T$ elapses. Next, the suspension ECU 50 multiplies the acquired vehicle speed V by the sampling time $\Delta T$, to thereby compute a distance $\Delta L$ by which the vehicle has advanced during the sampling time $\Delta T$ (S32). Notably, the sampling time $\Delta T$ is very short, as compared with the predicted arrival time T*.

Next, in S34, the suspension ECU 50 adds the distance $\Delta L$ to a distance Lb, to thereby compute a distance La that the vehicle has traveled after the start of the convex portion ride-on control. The distance Lb is the distance La which was computed in S34 when the present routine was executed last time. Notably, the distance Lb is set to zero when the present routine is executed for the first time. Subsequently, in S36, the suspension ECU 50 determines whether or not the distance La is less than the distance L.

In the case where the distance La is less than the distance L (S36: Yes), the wheel has not yet ridden on the convex portion. That is, in the case where the distance La is less than the distance L, the vehicle is traveling at a point between a position at which the preview sensor 65 detects the undulation information regarding the convex portion and a position at which the wheel rides on the convex portion. In this case, the suspension ECU 50 proceeds to S38, and acquires a target sprung ascending velocity Vu* corresponding to the present distance La. The target sprung ascending velocity Vu* is a target value of the sprung ascending velocity set for a period between a point where the preview sensor 65 detects the undulation information regarding the convex portion and a point immediately before the wheel rides on the convex portion, so that, when the wheel rides on the convex portion, the sprung member is ascending at an ascending velocity equal to the estimated unsprung ascending velocity Vdp. This target sprung ascending velocity Vu* is set such that, as the distance La increases (that is, as the wheel gets closer to the convex portion), the difference between the target sprung ascending velocity Vu* and the estimated unsprung ascending velocity Vdp decreases gradually. In the present embodiment, the target sprung ascending velocity Vu* is obtained from a map representing the relation between the distance La and the target sprung ascending velocity Vu* (distance-velocity map).

FIG. 10 shows an example of the distance-velocity map. In the example shown in this drawing, the distance La is represented by use of the distance L, and the target sprung ascending velocity Vu* is represented by use of the estimated unsprung ascending velocity Vdp. As can be understood from FIG. 10, although the target sprung ascending velocity Vu* increases gradually as the distance La increases (as the wheel gets closer to the convex portion), the target sprung ascending velocity Vu* does not exceed the estimated unsprung ascending velocity Vdp. Since the estimated unsprung ascending velocity Vdp is a fixed value, increasing the target sprung ascending velocity Vu* with the distance La means that, as the distance La increases, the difference between the target sprung ascending velocity Vu* and the estimated unsprung ascending velocity Vdp decreases.

FIG. 11 is a graph showing the relation between the distance La and the target sprung ascending velocity Vu* obtained from the distance-velocity map of FIG. 10. As shown in FIG. 11, when the distance La is small, the rate of increase of the target sprung ascending velocity Vu* with respect to increase of the distance La is large. However, when the distance La is large, the rate of increase of the target sprung ascending velocity Vu* with respect to increase of the distance La is small. The relation between the distance La and the target sprung ascending velocity Vu* can be represented by, for example, a sinusoidal curve (however, within a range of 0 to $\pi/2$).

After having acquired the target sprung ascending velocity Vu* in S38 with reference to the distance-velocity map, in S40, the suspension ECU 50 computes a rotational angular velocity (target rotational angular velocity $\omega$*) of the electric motor 31 required to render the actual sprung vertical velocity Vu equal to the target sprung ascending velocity Vu*. The rotational angular velocity of the electric motor 31 represents the expansion/contraction velocity of the electric actuator 30 (stroke velocity) Vs. Since the vertical distance between the sprung member and the unsprung member is changed through expansion/contraction of the electric actuator 30, the stroke velocity Vs represents the difference between the sprung vertical velocity (sprung ascending velocity) and the unsprung vertical velocity (unsprung ascending velocity); that is, the relative velocity. Therefore, in S40, the suspension ECU 50 computes a stroke velocity (target stroke velocity) Vs* required to render the actual sprung vertical velocity Vu equal to the target sprung ascending velocity Vu*, on the basis of the difference (Vu* - Vd) between the target sprung ascending velocity Vu* and the actual unsprung vertical velocity Vd, and the difference (Vu - Vd) between the actual sprung vertical velocity Vu and the actual unsprung vertical velocity Vd. Subsequently, the suspension ECU 50 computes the target rotational angular velocity $\omega$* on the basis of the computed target stroke velocity Vs*. Notably, the actual sprung vertical velocity Vu is obtained by means of integrating, with respect to time, the sprung vertical acceleration Gu detected by the sprung vertical acceleration sensor 61. Similarly, the actual unsprung vertical velocity Vd is obtained by means of integrating, with respect to time, the unsprung vertical acceleration Gd detected by the unsprung vertical acceleration sensor 62.

After having calculated the target rotational angular velocity $\omega$* in S40, the suspension ECU 50 outputs a control signal to the corresponding drive circuit 70 such that the rotational angular velocity $\omega$ of the electric motor 31 becomes equal to the target rotational angular velocity $\omega$* (S42). On the basis of this control signal, the rotation of the electric motor 31 is controlled. When the electric motor 31 rotates as a result of such control, its rotational motion is converted to a rectilinear motion by the ball screw mechanism 35, whereby the ball screw rod 36 moves in the axial direction. As a result of the axial movement of the ball screw rod 36, the electric actuator 30 expands such that the sprung vertical velocity becomes equal to the target sprung ascending velocity Vu*. Next, the suspension ECU 50 updates the distance Lb by storing the distance La in a memory area where the distance Lb is stored (S44). After that, the suspension ECU 50 returns to S30, and repeats the above-described control.

As a result of execution of the above-described control by the suspension ECU 50, the electric actuator 30 generates a driving force and expands such that the sprung vertical velocity becomes equal to the target sprung ascending velocity Vu* during a period in which the distance La is less than the distance L; i.e., in a period between a point where the preview sensor 65 detects the undulation information regarding the convex portion and a point immediately before the wheel rides on the convex portion. As described above, the target sprung ascending velocity Vu* gradually increases within a range not exceeding the estimated unsprung ascending velocity Vdp, as the wheel gets closer to the convex portion. Thus, by virtue of the above-described control of the electric actuator 30 during the period between the point where the preview sensor 65 detects the undulation information regarding the convex portion and the point immediately before the wheel rides on the convex portion, the electric actuator 30 generates a driving force and expands, whereby the ascending velocity of the sprung member increases gradually. Thus, when the wheel rides on the convex portion, the sprung member is already ascending at an ascending velocity equal to the estimated unsprung ascending velocity Vdp.

In the case where the suspension ECU 50 determines in S36 that the distance La is not less than the distance L (S36: No); that is, in the case where the suspension ECU 50 determines that the distance La becomes equal to the distance L and the wheel has ridden on the convex portion, the suspension ECU 50 proceeds to S46, and outputs an electricity-supply interruption signal to the drive circuit 70. Upon receipt of the electricity-supply interruption signal, for example, the drive circuit 70 brings all the switching elements (SW11, SW21, SW31, SW12, SW22, SW32) into an OFF state. Thus, the supply of electricity to the electric motor 31 is interrupted.

In the case where the supply of electricity to the electric motor 31 is interrupted, the electric motor 31 does not generate any rotational driving force. Also, the electric motor 31 generates substantially no damping force (resisting force) against external input. In the present specification, such a state will be referred to as a "free state." After that, the suspension ECU 50 ends the present routine.

FIG. 12 is a graph showing behavior of the vehicle, change in the unsprung vertical velocity Vd, change in the sprung vertical velocity Vu, change in the stroke velocity Vs, change in the displacement of the sprung member along the vertical direction (sprung vertical displacement) Xu, change in the stroke displacement Xs, and change in the sprung vertical acceleration Gu, during the period from the start of the convex portion ride-on control (when the preview sensor 65 detects undulation information regarding the convex portion) to a point when the wheels (in the drawing, the front wheels) ride on the convex portion A, for the case where the suspension ECU 50 executes the above-described convex portion ride-on control. The horizontal axis of the graph represents a change in the distance from the start of the control (La = 0) up to a point when the wheel rides on the convex portion A (La = L).

The unsprung vertical velocity Vd is obtained by means of integrating, with respect to time, the unsprung vertical acceleration Gd detected by the unsprung vertical acceleration sensor 62. The unsprung vertical velocity Vd is zero from the start of the control (La = 0) up to a point immediately before the wheel rides on the convex portion A. When the wheel rides on the convex portion A (La = L), the unsprung vertical velocity sharply changes from zero to the estimated unsprung ascending velocity Vdp because of the riding on.

The sprung vertical velocity (sprung ascending velocity) Vu is obtained by means of integrating, with respect to time, the sprung vertical acceleration Gu detected by the sprung vertical acceleration sensor 61. As shown in the drawing, the sprung vertical velocity Vu increases during a period between the start of the control (La = 0) and a point immediately before the wheel rides on the convex portion A, such that the difference between the sprung vertical velocity Vu and the estimated unsprung ascending velocity Vdp decreases gradually as the wheel gets closer to the convex portion A (as the distance La increases). The sprung vertical velocity Vu at the point immediately before the wheel rides on the convex portion A is approximately equal to the estimated unsprung ascending velocity Vdp.

The electric actuator 30 generates a driving force and expands by the time immediately before the wheel rides on the convex portion A, whereby the ascending velocity of the sprung member is increased. Therefore, before the wheel rides on the convex portion A, the ascending velocity of the sprung member already reached a velocity equal to the estimated unsprung ascending velocity Vdp. Therefore, in the case where the unsprung member is pushed up as a result of the wheel riding on the convex portion A, a change in the sprung vertical velocity caused by the pushing up force acting on the sprung member is reduced because of the ascending of the sprung member. In particular, in the present embodiment, when the wheel rides on the convex portion A, the sprung member is ascending at an ascending velocity equal to the ascending velocity of the unsprung member generated as a result of the wheel riding on the convex portion A. Therefore, when the wheel rides on the convex portion A, the sprung member and the unsprung member ascend at the same velocity. Therefore, the ascending velocity of the sprung member is not influenced by the ascending velocity of the unsprung member. Accordingly, the sprung vertical velocity hardly changes.

Moreover, since the electric motor 31 enters the free state when the wheel rides on the convex portion A, the electric motor 31 (electric actuator 30) generates neither driving force nor damping force. Therefore, the vertical velocity of the unsprung member generated as a result of the wheel riding on the convex portion A is not transmitted to the sprung member. Therefore, even when the wheel rides on the convex portion A, the sprung member can maintain the ascending velocity immediately before the wheel rides on the convex portion.

As described above, the sprung vertical velocity hardly changes between the periods before and after the wheel rides on the convex portion A. Therefore, as shown in the drawing, the sprung vertical acceleration Gu at the time when the wheel rides on the convex portion A is small. The small sprung vertical acceleration Gu means a small shock imparted to a driver when the wheel rides on the convex portion A. That is, in the case where the control described in the present embodiment is executed, the riding quality at the time when the wheel rides on the convex portion A is improved.

The stroke velocity Vs is obtained by means of differentiating, with respect to time, the stroke displacement Xs detected by the stroke sensor 63. The stroke velocity Vs represents the difference (Vu - Vp) between the sprung vertical velocity Vu and the unsprung vertical velocity Vd. The stroke velocity Vs is equal to the sprung vertical velocity Vu from the start of the control (La = 0) up to a point immediately before the wheel rides on the convex portion A. When the wheel rides on the convex portion A, the electric motor 31 enters the free state. Therefore, as described above, the ascending velocity of the unsprung member generated as a result of the wheel riding on the convex portion A is not transmitted to the sprung member. Therefore, the stroke velocity Vs at the time when the wheel rides on the convex portion A is represented by the difference between the ascending velocity of the sprung member generated as a result of expansion of the electric actuator 30 up to a point immediately before the wheel rides on the convex portion A, and the ascending velocity of the unsprung member generated as a result of the wheel riding on the convex portion A. Since the two velocities are equal to each other, the stroke velocity Vs becomes zero. Since the stroke velocity Vs is zero, when the wheel rides on the convex portion A, the rotation of the electric motor 31 stops.

That is, according to the present control, the electric actuator 30 is controlled such that, by virtue of expansion of the electric actuator 30 up to a point immediately before the wheel rides on the convex portion, the sprung vertical velocity Vu reaches the estimated unsprung ascending velocity Vdp before the wheel rides on the convex portion, and the electric motor 31 is brought into a free state when the wheel rides on the convex portion, whereby the stroke velocity Vs becomes zero. By virtue of such control, when the wheel rides on the convex portion, the sprung member and the unsprung member ascend at the same velocity. Also, a change in the sprung vertical velocity between the periods before and after the time when the wheel rides on the convex portion is minimized (for example, to zero). As a result, the sprung vertical acceleration Gu at the time when the wheel rides on the convex portion decreases, whereby riding quality is improved.

The sprung vertical displacement Xu is obtained by means of integrating the sprung vertical velocity Vu with respect to time. The sprung vertical displacement Xu increases quadratically immediately after the start of the control. Also, the sprung vertical displacement Xu increases linearly near the point where the wheel rides on the convex portion A. The stroke displacement Xs changes in the same manner as the sprung vertical displacement Xu from the start of the control up to a point immediately before the wheel rides on the convex portion A. Furthermore, when the wheel rides on the convex portion A, the stroke displacement Xs is constant, because the rotational angular speed of the electric motor 31 is decreased to zero.

The convex portion ride-on control of the present embodiment can be executed when the predicted arrival time T* is determined to be equal to or greater than the necessary time T0 in S16 of FIG. 7. As described above, the necessary time T0 is represented by 1/(4f) (f is the sprung resonance frequency). In the case where a change in the ascending velocity (sprung vertical velocity Vu) of the sprung member is represented by a sinusoidal curve as shown in FIG. 12, the time between the start of the control and the point at which the wheel rides on the convex portion (predicted arrival time) corresponds to a 1/4 section of the vibration period (vibration cycle) of the sprung vertical velocity.

In the case where a change in the ascending velocity of the sprung member (sprung vertical velocity Vu) with time is represented by a periodic function such as a sinusoidal curve, the predicted arrival time T* (the vibration period of the sprung vertical velocity) being equal to or greater than 1/ (4f) means that the frequency of the periodic function is equal to or less than the sprung resonance frequency. For example, in the assumed case where the sprung resonance frequency f is 1 Hz, when the time between the start of the control and the point at which the wheel rides on the convex portion (predicted arrival time T*) is equal to or longer than 0.25 sec (1/(4f)), the result of the determination in S16 becomes "Yes," and the convex portion ride-on control is executed.

That is, in the present embodiment, the electric actuator 30 is controlled such that the vibration frequency of the ascending velocity of the sprung member in the period between a point at which the electric actuator 30 starts to expand and a point at which the wheel rides on the convex portion becomes equal to or less than the sprung resonance frequency. Accordingly, the ascending velocity of the sprung member in the period between the start of the control and the point immediately before the wheel rides on the convex portion changes gradually such that its vibration frequency becomes equal to or less than the sprung resonance frequency. Since the sprung member ascends slowly from a point before the wheel rides on the convex portion to a point at which the wheel rides on the convex portion, riding quality in this period is improved.

In the above-described first embodiment, since the sprung vertical velocity Vu increases continuously from the start of the control up to the point immediately before the wheel rides on the convex portion, the stroke displacement Xs also increases continuously. Furthermore, since the range of expansion/contraction of the electric actuator 30 is restricted by the stopper, when the stroke displacement Xs increases continuously, the expansion of the electric actuator 30 may be restricted by the stopper.

In the case where the expansion of the electric actuator 30 is restricted by the stopper during execution of the convex portion ride-on control, the effect of improving riding quality by the convex portion ride-on control cannot be achieved. Accordingly, preferably, the electric actuator 30 is controlled such that the expansion of the electric actuator 30 is not restricted by the stopper during the convex portion ride-on control.

FIG. 13 is a flowchart showing a convex portion ride-on control routine according to a second embodiment of the present invention. This convex portion ride-on control routine is executed in S26 of FIG. 7. According to this convex portion ride-on control routine, the electric actuator 30 is controlled such that the expansion of the electric actuator 30 is not restricted by the stopper. This routine is basically the same as the routine shown in FIG. 9, except that a different one of maps for acquiring the target sprung ascending velocity Vu* is selectively used depending on the results of a determination as to whether the estimated unsprung ascending velocity Vdp is greater than a reference velocity V1.

When this routine is started, the suspension ECU 50 first acquires the present vehicle speed V every time the predetermined sampling time ΔT elapses (S50). Next, the suspension ECU 50 multiplies the acquired vehicle speed V by the sampling time ΔT, to thereby compute the distance ΔL (S52). Subsequently, the suspension ECU 50 adds the distance ΔL to the distance Lb, to thereby compute the distance La (S54).

Subsequently, the suspension ECU 50 determines whether or not the distance La is less than the distance L (S56). In the case where the distance La is less than the distance L (S56: Yes), in S57, the suspension ECU 50 determines whether or not the estimated unsprung ascending velocity Vdp is greater than the reference velocity V1. In the case where the estimated unsprung ascending velocity Vdp is greater than the reference velocity V1, there is a large possibility that the stroke displacement Xs required to increase the ascending velocity of the sprung member to a velocity equal to the estimated unsprung ascending velocity Vdp becomes excessively large, and the expansion of the electric actuator 30 is restricted by the stopper. Meanwhile, in the case where the estimated unsprung ascending velocity Vdp is less than the reference velocity V1, the stroke displacement Xs does not become so large, and the expansion of the electric actuator 30 is unlikely to be restricted by the stopper. The reference velocity V1 is set in advance as a threshold velocity used to determine whether or not the expansion of the electric actuator 30 is restricted by the stopper.

In the case where the estimated unsprung ascending velocity Vdp is greater than the reference velocity V1 (S57: Yes), in S58, the suspension ECU 50 acquires the target sprung ascending velocity Vu* corresponding to the present distance La with reference to the first map. Meanwhile, in the case where the estimated unsprung ascending velocity Vdp is equal to or less than the reference velocity V1 (S57: No), in S59, the suspension ECU 50 acquires the target sprung ascending velocity Vu* corresponding to the present distance La with reference to the second map.

FIG. 14 shows the first and second maps. The relation between the distance La and the target sprung ascending velocity Vu* shown in the second map is identical with the relation between the distance La and the target sprung ascending velocity Vu* shown in the distance-velocity map of FIG. 10. The relation between the distance La and the target sprung ascending velocity Vu* shown in the first map differs from the relation between the distance La and the target sprung ascending velocity Vu* shown in the distance-velocity map of FIG. 10.

According to the first map, when the distance La is small (when the distance La is 0 to 0.3L in the drawing), the target sprung ascending velocity Vu* assumes a negative value; and, when the distance La is large (when the distance La is 0.4L to 0.9L in the drawing), the target sprung ascending velocity Vu* assumes a positive value. Meanwhile, according to the second map, the target sprung ascending velocity Vu* assumes a positive value irrespective of whether the distance La is small or large. Notably, the estimated unsprung ascending velocity Vdp assumes a positive value. Also, an upward target sprung ascending velocity is represented by a positive velocity, and a downward target sprung ascending velocity is represented by a negative velocity.

In the case where the suspension ECU 50 refers to the first map, the target sprung ascending velocity is set such that the sprung member descends at the beginning of the convex portion ride-on control (when the distance La is small), and the sprung member ascends with elapse of time. Meanwhile, in the case where the suspension ECU 50 refers to the second map, the target sprung ascending velocity is set such that the sprung member ascends all the time from the start of the convex portion ride-on control to a point immediately before the wheel rides on the convex portion.

After having acquired the target sprung ascending velocity Vu* in S58 or S59, the suspension ECU 50 computes the target rotational angular velocity ω* of the electric motor 31 on the basis of the acquired target sprung ascending velocity Vu* (S60). Subsequently, the suspension ECU 50 outputs a control signal to the drive circuit 70 of the electric motor 31 such that the electric motor 31 rotates at the target rotational angular velocity ω* (S62). Thus, the rotation of the electric motor 31 is controlled, and the electric actuator 30 expands and contracts such that the sprung vertical velocity becomes equal to the target sprung ascending velocity Vu*. Subsequently, the suspension ECU 50 updates the distance Lb by storing the distance La in a memory area where the distance Lb is stored (S64). After that, the suspension ECU 50 returns to S50, and repeats the above-described control.

In the case where the suspension ECU 50 determines in S56 that the distance La is not less than the distance L (S56: No); that is, in the case where the suspension ECU 50 determines that the distance La becomes equal to the distance L and the wheel has ridden on the convex portion, the suspension ECU 50 proceeds to S66, and outputs an electricity-supply interruption signal to the drive circuit 70. Upon receipt of the electricity-supply interruption signal, for example, the drive circuit 70 brings all the switching elements into an OFF state. Thus, the supply of electricity to the electric motor 31 is interrupted, whereby the electric motor 31 enters the free state. After that, the suspension ECU 50 ends the present routine.

By virtue of the above-described control, when the estimated unsprung ascending velocity Vdp is greater than the reference velocity V1, the electric actuator 30 is controlled such that the sprung member first descends at the beginning of the convex portion ride-on control, and then ascends. Furthermore, the electric actuator 30 is controlled such that the ascending velocity of the sprung member reaches a velocity close to (or equal to) the estimated unsprung ascending velocity Vdp immediately before the wheel rides on the convex portion.

FIG. 15 is a graph showing behavior of the vehicle, change in the unsprung vertical velocity Vd, change in the sprung vertical velocity Vu, change in the stroke velocity Vs, change in the sprung vertical displacement Xu, change in the stroke displacement Xs, and change in the sprung vertical acceleration Gu, during the period from the start of the control to a point at which the wheels (in the drawing, the front wheels) ride on the convex portion A, for the case where the suspension ECU 50 executes the convex portion ride-on control shown in FIG. 13 when the estimated unsprung ascending velocity Vdp is greater than the reference velocity V1. The horizontal axis of the graph represents a change in the distance from the start of the control (La = 0) up to the point when the wheel rides on the convex portion A (La = L).

As shown in the drawing, the unsprung vertical velocity Vd is zero from the start of the control (La = 0) up to the point immediately before the wheel rides on the convex portion A. When the wheel rides on the convex portion A (La = L), the unsprung vertical velocity Vd sharply changes from zero to the estimated unsprung ascending velocity Vdp.

The sprung vertical velocity Vu assumes a negative value at the beginning of the control (when the distance La is small), and assumes a positive value after that. When the wheel rides on the convex portion A, the sprung vertical velocity Vu is approximately equal to the estimated unsprung ascending velocity Vdp.

Similar to the sprung vertical velocity Vu, the stroke velocity Vs assumes a negative value at the beginning of the control, and assumes a positive value after that. Therefore, the electric actuator 30 contracts at the beginning of the control, and then expands. Furthermore, at the point immediately before the wheel rides on the convex portion A, the stroke velocity Vs is approximately equal in magnitude to the estimated unsprung ascending velocity Vdp. When the wheel rides on the convex portion A (La = L), the electric motor 31 enters the free state. Therefore, the ascending velocity of the unsprung member generated as a result of the wheel riding on the convex portion A is not transmitted to the sprung member. Therefore, the stroke velocity Vs at the time when the wheel rides on the convex portion A is represented by the difference between the ascending velocity of the sprung member generated as a result of expansion of the electric actuator 30 up to the point immediately before the wheel rides on the convex portion A, and the ascending velocity of the unsprung member generated as a result of the wheel riding on the convex portion A. Since the two velocities are equal to each other, the stroke velocity Vs becomes zero. Since the stroke velocity Vs is zero, when the wheel rides on the convex portion A, the rotation of the electric motor 31 stops.

The sprung vertical displacement Xu assumes a negative value at the beginning of the control. That is, at the beginning of the control, the sprung member descends. After that, the sprung vertical displacement Xu increases quadratically, and increases linearly immediately before the wheel rides on the convex portion.

The stroke displacement Xs assumes a negative value when the electric actuator 30 contracts from a reference length (a length when the stroke displacement Xs is 0), and assumes a positive value when the electric actuator 30 expands from the reference length. As shown in the drawing, the stroke displacement Xs assumes a negative value at the beginning of the control. After that, the stroke displacement Xs increases (expansion) quadratically, and increases linearly immediately before the wheel rides on the convex portion A. Furthermore, since the stroke velocity Vs is decreased to zero when the wheel rides on the convex portion A, the stroke displacement Xs is constant.

As can be understood from the drawing, in the present embodiment as well, the sprung vertical velocity hardly changes between the periods before and after the wheel rides on the convex portion A. Therefore, the sprung vertical acceleration Gu at the time when the wheel rides on the convex portion A is small. Accordingly, in the case where the control described in the present embodiment is executed, the riding quality at the time when the wheel rides on the convex portion A is improved.

Also, the electric actuator 30 first contracts immediately after the start of the convex portion ride-on control, and then expands gradually. Therefore, the final stroke displacement Xs of the electric actuator 30 at the time when the wheel rides on the convex portion is made smaller by an amount corresponding to the amount by which the electric actuator 30 contracted first. As a result, the stroke displacement Xs at the time when the wheel rides on the convex portion is restricted to be less than the maximum stroke displacement Xmax, which is a threshold stroke displacement, at which the expansion of the electric actuator 30 is limited by the stopper. Therefore, it is possible to prevent occurrence of a situation where the expansion of the electric actuator 30 is limited by the stopper.

In the above, the embodiments of the present invention have been described. Each of the suspension apparatuses shown in the first and second embodiments includes an electric actuator 30 disposed between a sprung member of a vehicle and an unsprung member connected to a wheel and adapted to change the distance between the sprung member and the unsprung member through expansion and contraction thereof; a preview sensor 65 which acquires undulation information of a road surface ahead of the vehicle when the vehicle is traveling; and a suspension ECU 50 which controls the electric actuator 30 on the basis of the undulation information acquired by the preview sensor 65. The suspension ECU 50 includes a convex portion ride-on control section (S26) for controlling the electric actuator 30 when the preview sensor 65 acquires undulation information regarding a convex portion of the road surface. The convex portion ride-on control section (S26) controls the electric actuator 30 during a predetermined period of time between a point at which the preview sensor 65 acquires the undulation information regarding the convex portion and a point immediately before the wheel rides on the convex portion, such that ascending velocity of the sprung member increases as a result of expansion of the electric actuator 30 during the predetermined period of time, and reaches the estimated unsprung ascending velocity Vdp before the wheel rides on the convex portion.

According to suspension apparatuses of the first and second embodiments, when the preview sensor 65 acquires undulation information regarding a convex portion of a road surface, during the predetermined period of time from that point in time to a point immediately before the wheel rides on the convex portion, the electric actuator 30 expands, whereby the ascending velocity of the sprung member increases. Thus, the ascending velocity of the sprung member reaches the estimated unsprung ascending velocity Vdp before the wheel rides on the convex portion as a result of the expansion of the electric actuator 30 up to that point. Therefore, in the case where the wheel rides on the convex portion and the unsprung member is pushed up, a change in the sprung vertical velocity caused by the pushing up force acting on the sprung member is reduced because the sprung member ascends at the estimated unsprung ascending velocity Vdp. Therefore, riding quality is improved.

Furthermore, the convex portion ride-on control section (S26) controls the electric actuator 30 such that, when the wheel rides on the convex portion, the magnitude of a relative velocity (stroke velocity Vs), which is the difference between the ascending velocity of the sprung member and the ascending velocity of the unsprung member, becomes equal to a velocity represented by the difference between the ascending velocity of the sprung member obtained through expansion of the electric actuator 30 up to that time and the ascending velocity of the unsprung member generated as a result of the wheel riding on the convex portion. By virtue of such a control, when the wheel rides on the convex portion, the ascending velocity of the sprung member is maintained at the ascending velocity generated as a result of expansion of the electric actuator 30 up to that time. Therefore, a change in the sprung vertical velocity at the time when the wheel rides on the convex portion is reduced, whereby riding quality is improved.

Furthermore, the convex portion ride-on control section (S26) controls the actuator such that, when the wheel rides on the convex portion, the magnitude of the relative velocity becomes zero. Therefore, the ascending velocity of the unsprung member does not affect the change in the ascending velocity of the sprung member. Accordingly, the change in the sprung vertical velocity at the time when the wheel rides on the convex portion is reduced, whereby riding quality is improved.

Furthermore, the suspension ECU 50 includes an unsprung ascending velocity estimation section (S18, S20) for estimating, on the basis of the undulation information regarding the convex portion, the ascending velocity of the unsprung member generated as a result of the wheel riding on the convex portion. The convex portion ride-on control section (S26) controls the electric actuator 30, on the basis of the estimated unsprung ascending velocity Vdp obtained by the unsprung ascending velocity estimation section (S18, S20), during the predetermined period of time before the wheel rides on the convex portion, such that ascending velocity of the sprung member increases as a result of expansion of the electric actuator 30 during the predetermined period of time, and reaches the estimated unsprung ascending velocity Vdp before the wheel rides on the convex portion as a result of the expansion of the electric actuator 30 up to that point. By virtue of such a control, the magnitude of the stroke velocity Vs at the time when the wheel rides on the convex portion is decreased to zero. Thus, the sprung vertical acceleration at the time when the wheel rides on the convex portion decreases, whereby riding quality is improved.

Furthermore, the convex portion ride-on control section (S26) executes the convex portion ride-on control when the vibration frequency of the ascending velocity of the sprung member (sprung vertical velocity Vu) in a period between a point at which the electric actuator 30 starts to expand and a point at which the wheel rides on the convex portion is equal to or less than the sprung resonance frequency. Therefore, during the period from the point at which the electric actuator 30 starts to expand and the point at which the wheel rides on the convex portion, the sprung vertical velocity changes slowly at a frequency equal to or lower than the sprung resonance frequency (e.g., 1 Hz). Therefore, riding quality before the wheel rides on the convex portion is improved.

Moreover, the convex portion ride-on control section (S26) controls the electric actuator 30 such that the electric actuator 30 generates a driving force during the predetermined period of time before the wheel rides on the convex portion. When the wheel rides on the convex portion, the convex portion ride-on control section (S26) controls the electric actuator 30 such that the electric actuator 30 generates no driving force and substantially no resistance force against external input. That is, the convex portion ride-on control section (S26) actively controls the electric actuator 30 before the wheel rides on the convex portion, and controls the electric actuator 30 such that the electric actuator 30 generates no force when the wheel rides on the convex portion. By virtue of this control, since the electric actuator 30 generates neither driving force nor resistance force (damping force) when the wheel rides on the convex portion, the ascending velocity of the unsprung member generated as a result of the wheel riding on the convex portion is prevented from being transmitted to the sprung member side. Therefore, the change in the sprung vertical velocity at the time when the wheel rides on the convex portion can be reduced, whereby riding quality is improved.

Moreover, the electric actuator 30 includes an electric motor 31 which rotates upon supply of electricity thereto, and a ball screw mechanism 35 for converting rotational motion of the electric motor 31 to rectilinear motion. The convex portion ride-on control section (S26) supplies electricity to the electric motor 31 during the predetermined period of time before the wheel rides on the convex portion, to thereby drive the electric actuator 30 such that the ascending velocity of the sprung member increases gradually (S42, S62), and interrupts the supply of electricity to the electric motor 31 when the wheel rides on the convex portion (S46, S66). By virtue of this control, electricity is supplied to the electric motor 31 during the predetermined period of time immediately before the wheel rides on the convex portion, and the electric actuator 30 expands such that the ascending velocity of the sprung member reaches the estimated unsprung ascending velocity Vdp before the wheel rides on the convex portion. Furthermore, since the supply of electricity to the electric motor 31 is stopped when the wheel rides on the convex portion, the electric motor 31 enters a free state. Since the electric motor 31 in the free state hardly generates damping force, the unsprung vertical velocity generated as a result of the wheel riding on the convex portion is hardly transmitted to the sprung member. Therefore, the change in the sprung vertical velocity at the time when the wheel rides on the convex portion can be reduced, whereby riding quality is improved.

Although the embodiments of the present invention have been described above, the present invention is not limited to the embodiments.

In the above-described embodiments, the electric actuator 30 is controlled such that, through expansion of the electric actuator 30 in the period before the wheel rides on the convex portion, the ascending velocity of the sprung member reaches a speed equal to the estimated unsprung ascending velocity Vdp before the wheel rides on the convex portion. However, the effect of the present invention is attained so long as the sprung member has an ascending velocity when the wheel rides on the convex portion.

Also, in the above-described embodiments, when the wheel rides on the convex portion, the supply of electricity to the electric motor 31 is stopped so as to bring the electric motor 31 into a free state. However, the supply of electricity to the electric motor 31 may be controlled such that the electric motor 31 does not generate driving force and damping force decreases (for example, the electric motor 31 may be operated as a generator so as to generate small current).

In the second embodiment, in order to prevent occurrence of a situation where expansion of the electric actuator 30 is restricted by a stopper, the electric actuator 30 is controlled such that the sprung member descends at the beginning of the convex portion ride-on control. However, the timing at which the control is started may be delayed. Moreover, in the second embodiment, the electric actuator 30 is controlled such that the sprung member descends at the beginning of the convex portion ride-on control when the estimated unsprung ascending velocity Vdp is greater than the reference velocity V1. However, the electric actuator 30 may be controlled such that the sprung member descends at the beginning of the convex portion ride-on control when the period of time between the point at which the preview sensor 65 detects the undulation information regarding the convex portion and the point at which the wheel rides on the convex portion is long (for example, when the vehicle is traveling at low speed).

As described above, the present invention can be modified without departing from the scope of the present invention.

## Claims

1. A suspension apparatus for a vehicle comprising an actuator disposed between a sprung member of the vehicle and an unsprung member connected to a wheel and adapted to change the distance between the sprung member and the unsprung member through expansion and contraction thereof; an undulation information acquisition apparatus which acquires undulation information of a road surface ahead of the vehicle when the vehicle is traveling; and an actuator control apparatus which controls the actuator on the basis of the undulation information acquired by the undulation information acquisition apparatus, wherein
   the actuator control apparatus includes a convex portion ride-on control section for controlling the actuator when the undulation information acquisition apparatus acquires undulation information regarding a convex portion of the road surface; and
   the convex portion ride-on control section controls the actuator during a predetermined period of time between a point at which the undulation information acquisition apparatus acquires the undulation information regarding the convex portion and a point immediately before the wheel rides on the convex portion, such that ascending velocity of the sprung member increases as a result of expansion of the actuator during the predetermined period of time, and reaches a predetermined ascending velocity before the wheel rides on the convex portion.

2. A suspension apparatus according to claim 1, wherein the convex portion ride-on control section controls the actuator such that, when the wheel rides on the convex portion, the magnitude of a relative velocity which is the difference between the ascending velocity of the sprung member and the ascending velocity of the unsprung member becomes equal to a velocity represented by the difference between the predetermined ascending velocity and an ascending velocity of the unsprung member generated as a result of the wheel riding on the convex portion.

3. A suspension apparatus according to claim 1 or 2, wherein
the actuator control apparatus includes an unsprung ascending velocity estimation section for estimating, on the basis of the undulation information regarding the convex portion, the ascending velocity of the unsprung member generated as a result of the wheel riding on the convex portion; and
the convex portion ride-on control section controls the actuator, on the basis of the ascending velocity of the unsprung member estimated by the unsprung ascending velocity estimation section, during the predetermined period of time such that the ascending velocity of the sprung member increases as a result of expansion of the actuator during the predetermined period of time, and reaches the predetermined ascending velocity before the wheel rides on the convex portion.

**4.** A suspension apparatus according to claim 3, wherein the predetermined ascending velocity is equal to the ascending velocity of the unsprung member estimated by the unsprung ascending velocity estimation section.

**5.** A suspension apparatus according to any one of claims 1 to 4, wherein the convex portion ride-on control section controls the actuator such that a vibration frequency of the ascending velocity of the sprung member in a period between a point at which the actuator starts to expand and a point at which the wheel rides on the convex portion becomes equal to or less than a sprung resonance frequency.

**6.** A suspension apparatus according to any one of claims 1 to 5, wherein the convex portion ride-on control section controls the actuator such that the actuator generates a driving force during the predetermined period of time before the wheel rides on the convex portion, and controls the actuator such that the actuator generates no driving force and substantially no resistance force against external input when the wheel rides on the convex portion.

**7.** A suspension apparatus according to any one of claims 1 to 6, wherein
the actuator is an electric actuator which operates upon supply of electricity thereto; and
the convex portion ride-on control section supplies electricity to the electric actuator during the predetermined period of time so as to drive the electric actuator such that the ascending velocity of the sprung member increases gradually, and interrupts the supply of electricity to the electric actuator when the wheel rides on the convex portion.

**8.** A suspension apparatus according to claim 7, wherein the electric actuator includes an electric motor which rotates upon supply of electricity thereto, and a conversion mechanism for converting rotational motion of the electric motor to rectilinear motion; and
the convex portion ride-on control section supplies electricity to the electric motor during the predetermined period of time so as to drive the electric actuator such that the ascending velocity of the sprung member increases gradually, and interrupts the supply of electricity to the electric motor when the wheel rides on the convex portion.

FIG.1

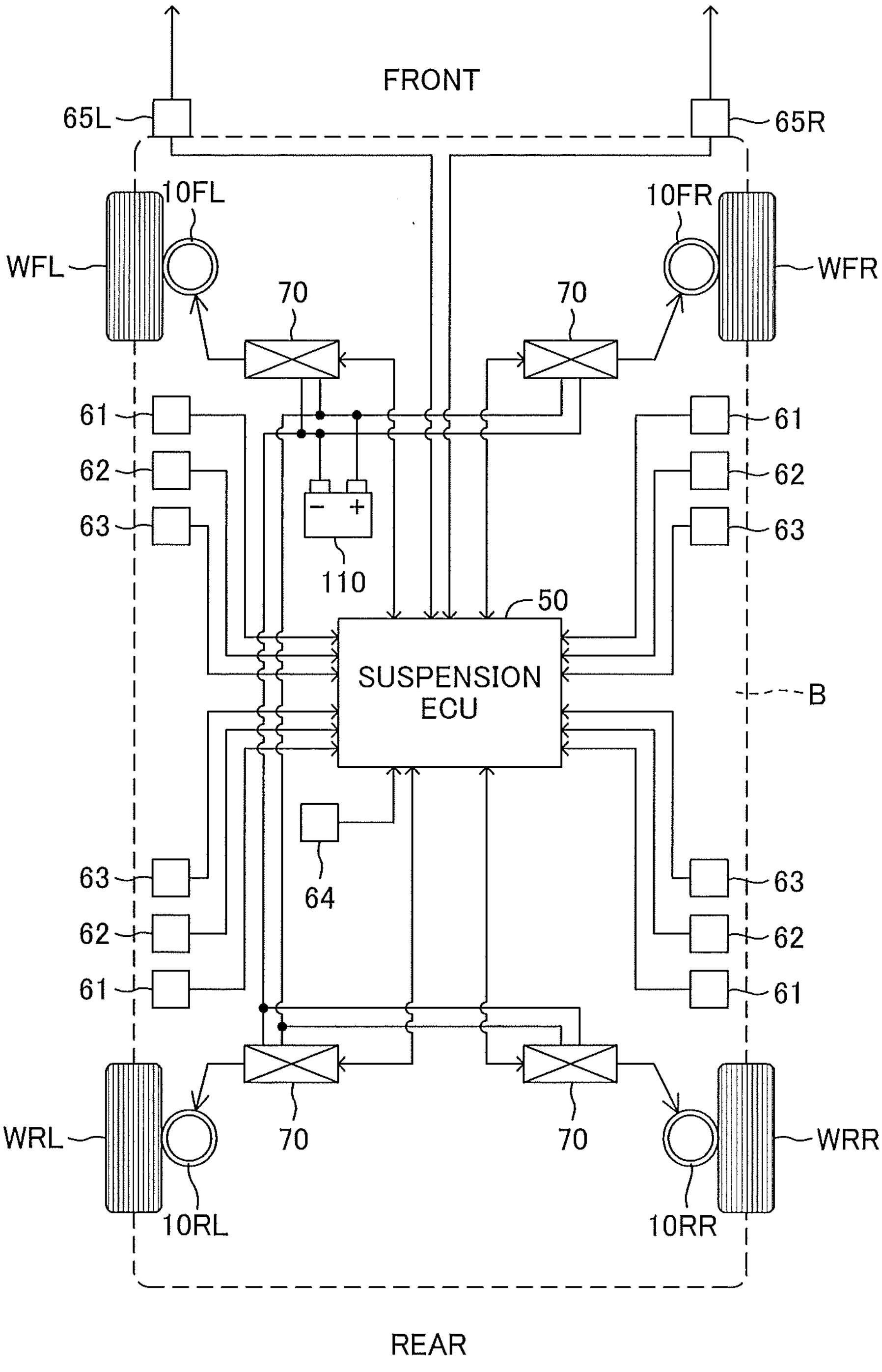

FRONT
65L
65R
10FL
10FR
WFL
WFR
70
70
61
62
63
61
62
63
110
50
SUSPENSION ECU
B
64
63
62
61
63
62
61
70
70
WRL
WRR
10RL
10RR
REAR

FIG.2

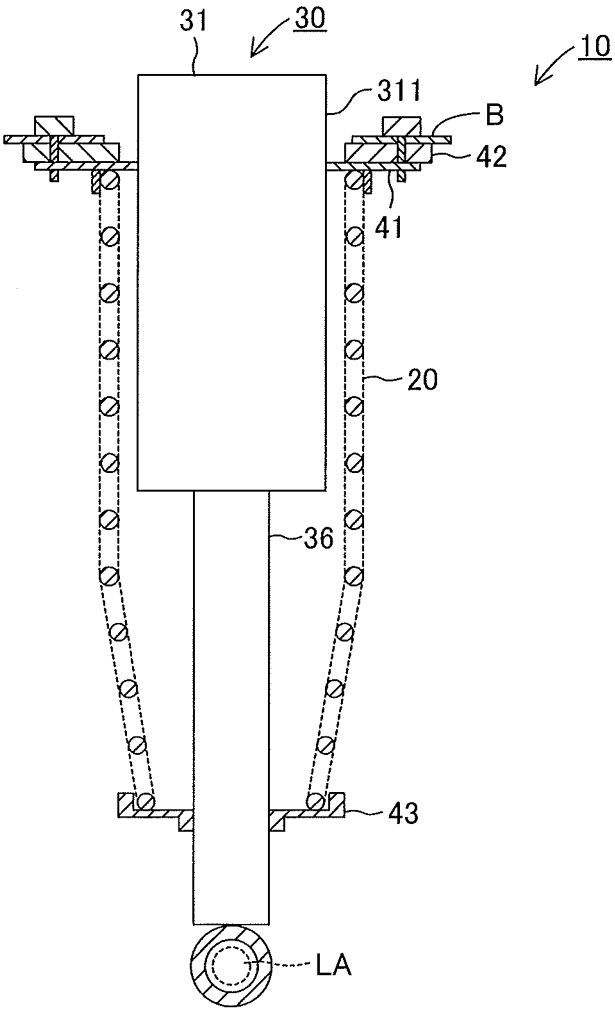

FIG.3

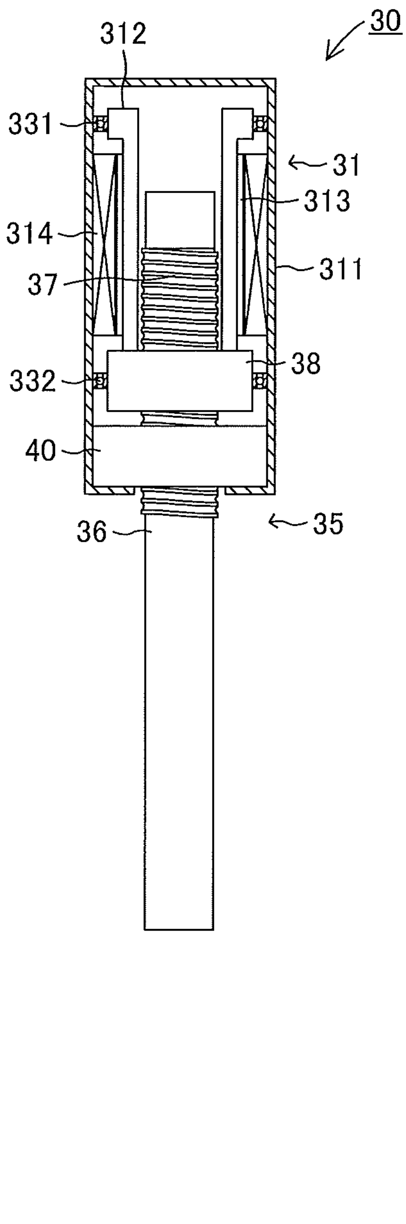

# FIG.4

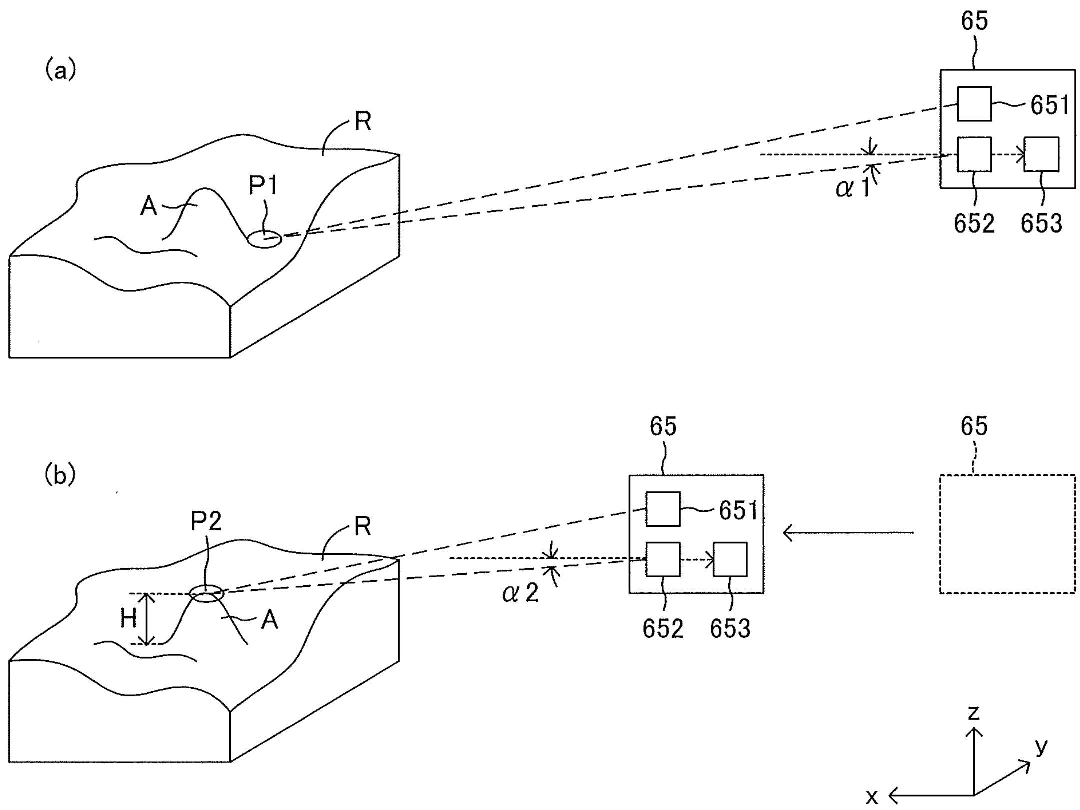

# FIG.5

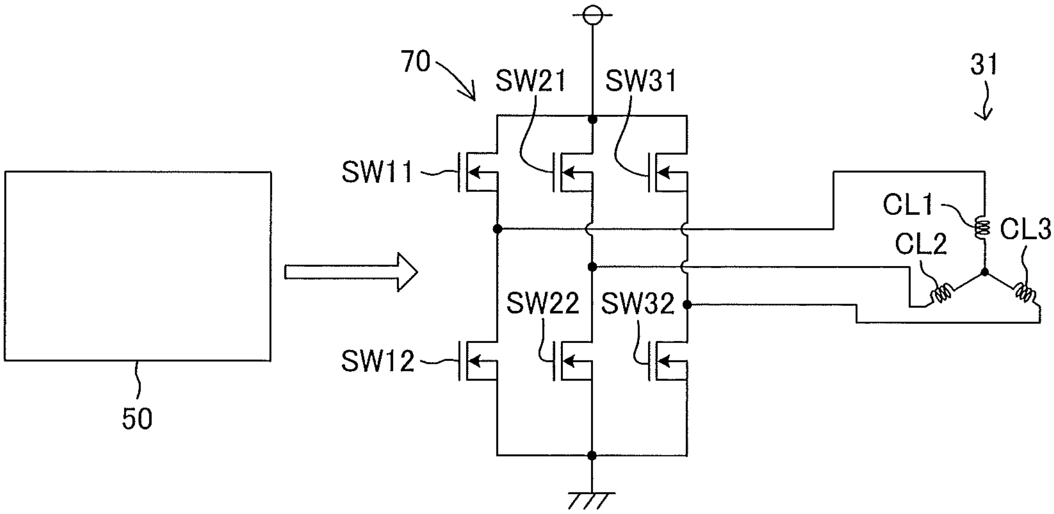

FIG.6

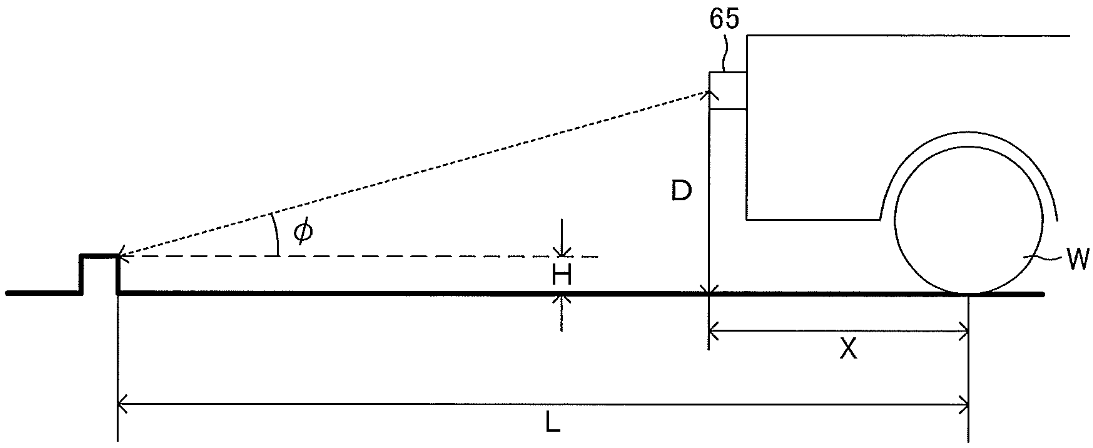

FIG.7

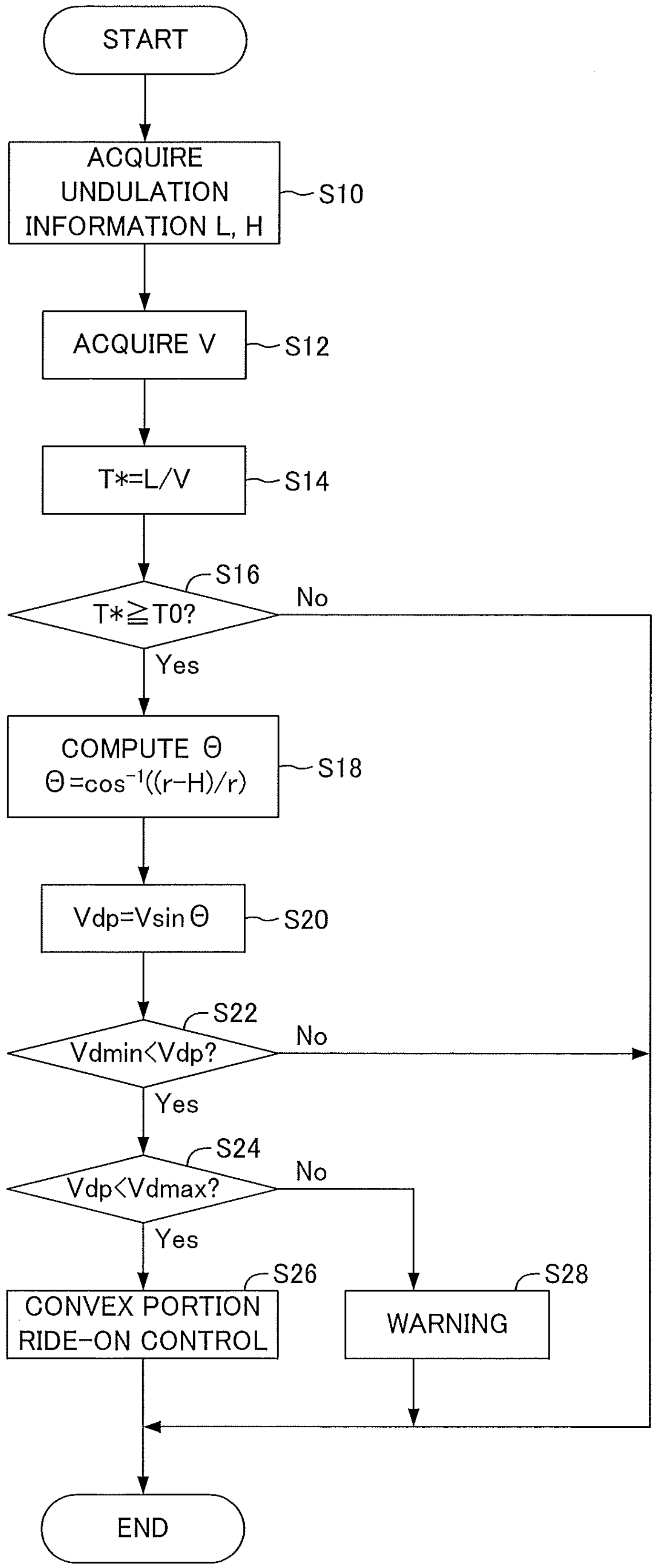
START
ACQUIRE UNDULATION INFORMATION L, H
S10
ACQUIRE V
S12
T*=L/V
S14
S16
T*≧T0?
No
Yes
COMPUTE Θ
Θ=cos⁻¹((r−H)/r)
S18
Vdp=VsinΘ
S20
S22
Vdmin<Vdp?
No
Yes
S24
Vdp<Vdmax?
No
Yes
S26
CONVEX PORTION RIDE-ON CONTROL
S28
WARNING
END

FIG.8

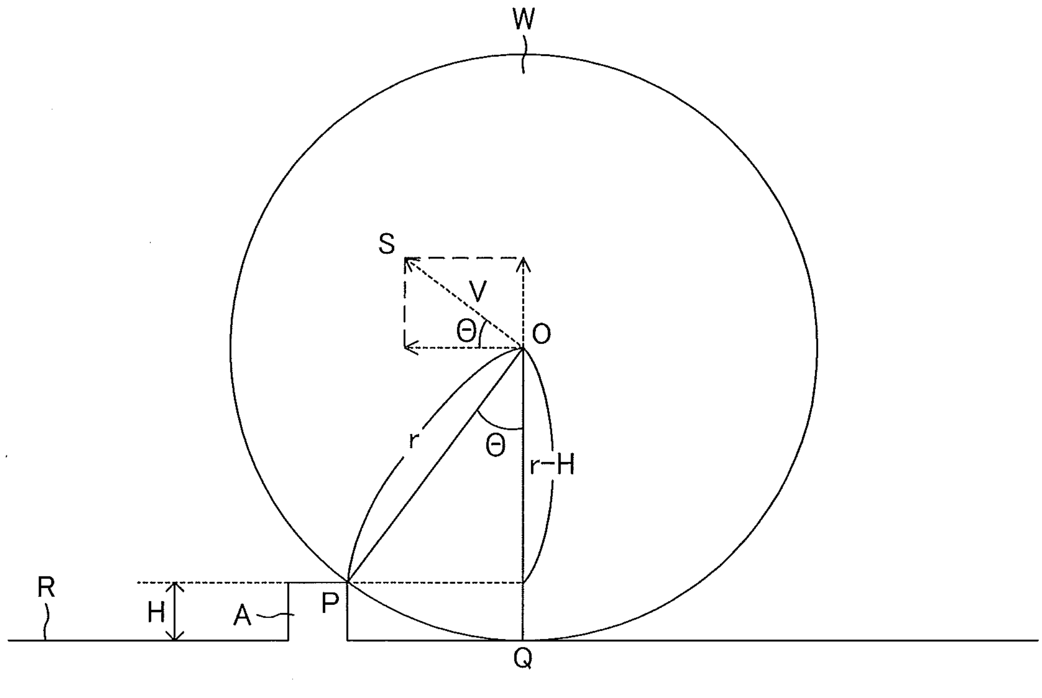

FIG.9

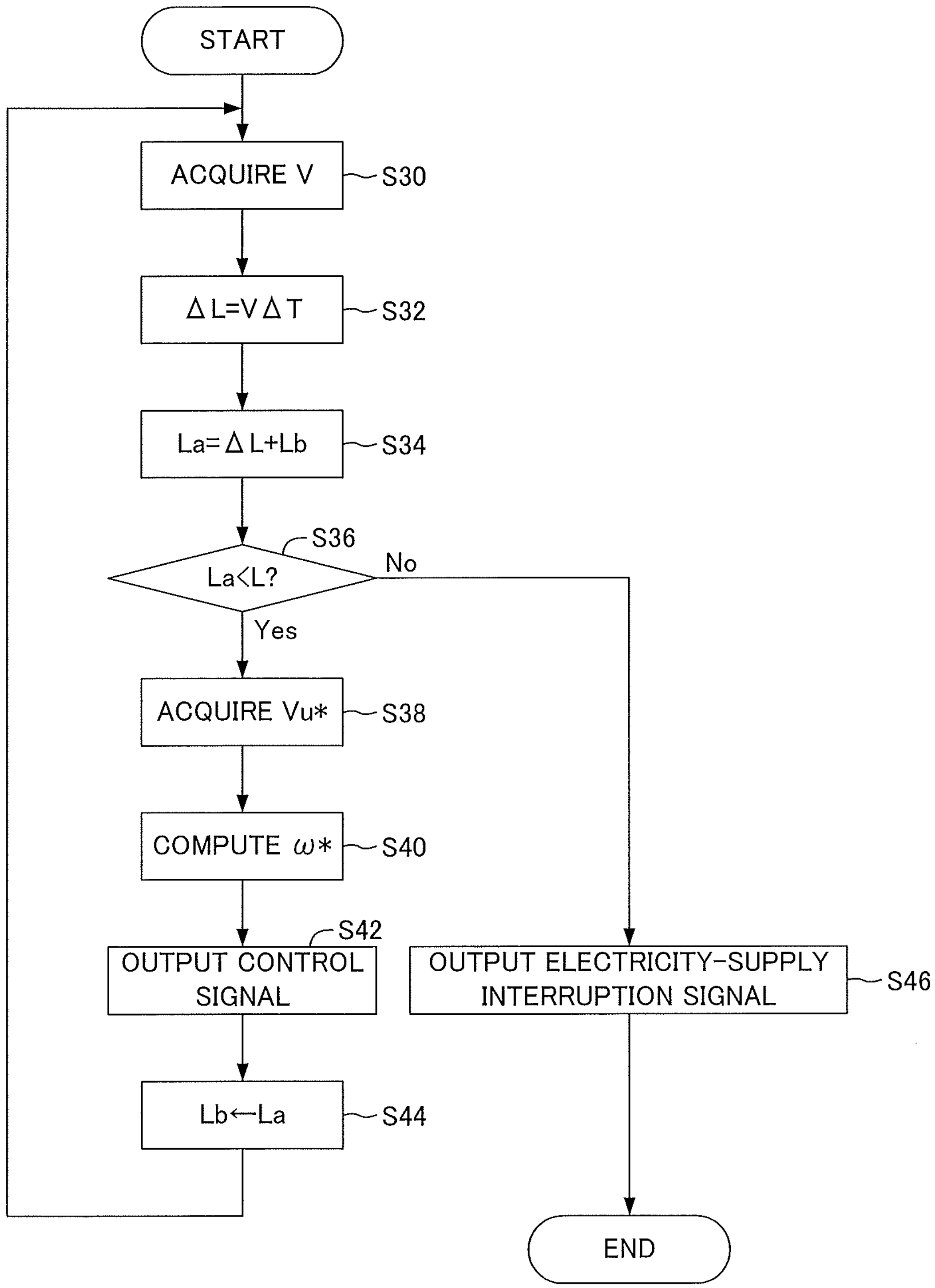
START
ACQUIRE V
S30
ΔL=VΔT
S32
La=ΔL+Lb
S34
S36
La<L?
No
Yes
ACQUIRE Vu*
S38
COMPUTE ω*
S40
S42
OUTPUT CONTROL SIGNAL
OUTPUT ELECTRICITY-SUPPLY INTERRUPTION SIGNAL
S46
Lb←La
S44
END

# FIG.10

| La | Vu* | La | Vu* |
|---|---|---|---|
| 0 | 0 | 0.5L | 0.71Vdp |
| ⋮ | ⋮ | ⋮ | ⋮ |
| 0.1L | 0.16Vdp | 0.6L | 0.81Vdp |
| ⋮ | ⋮ | ⋮ | ⋮ |
| 0.2L | 0.31Vdp | 0.7L | 0.89Vdp |
| ⋮ | ⋮ | ⋮ | ⋮ |
| 0.3L | 0.45Vdp | 0.8L | 0.95Vdp |
| ⋮ | ⋮ | ⋮ | ⋮ |
| 0.4L | 0.59Vdp | 0.9L | 0.99Vdp |
| ⋮ | ⋮ | ⋮ | ⋮ |

FIG.11

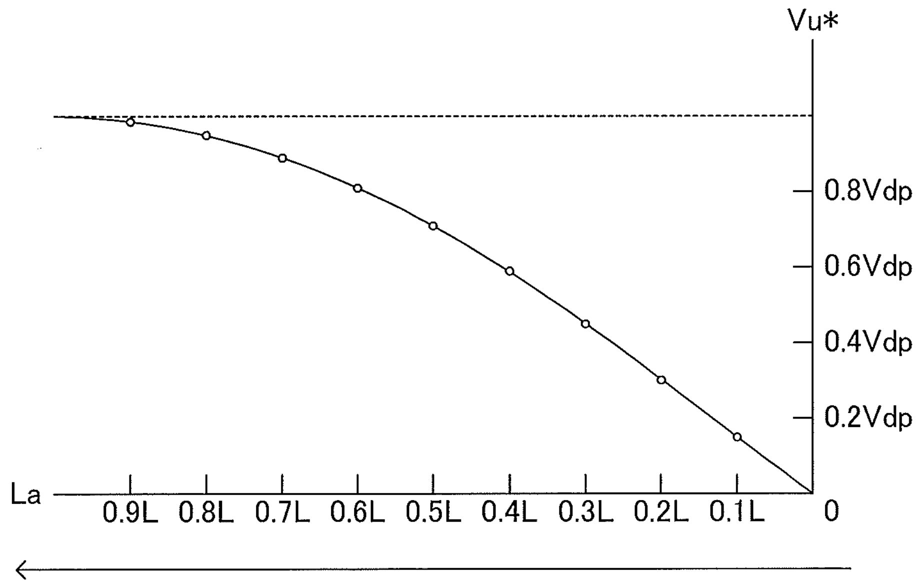
Vu*
0.8Vdp
0.6Vdp
0.4Vdp
0.2Vdp
La
0.9L
0.8L
0.7L
0.6L
0.5L
0.4L
0.3L
0.2L
0.1L
0

FIG.12

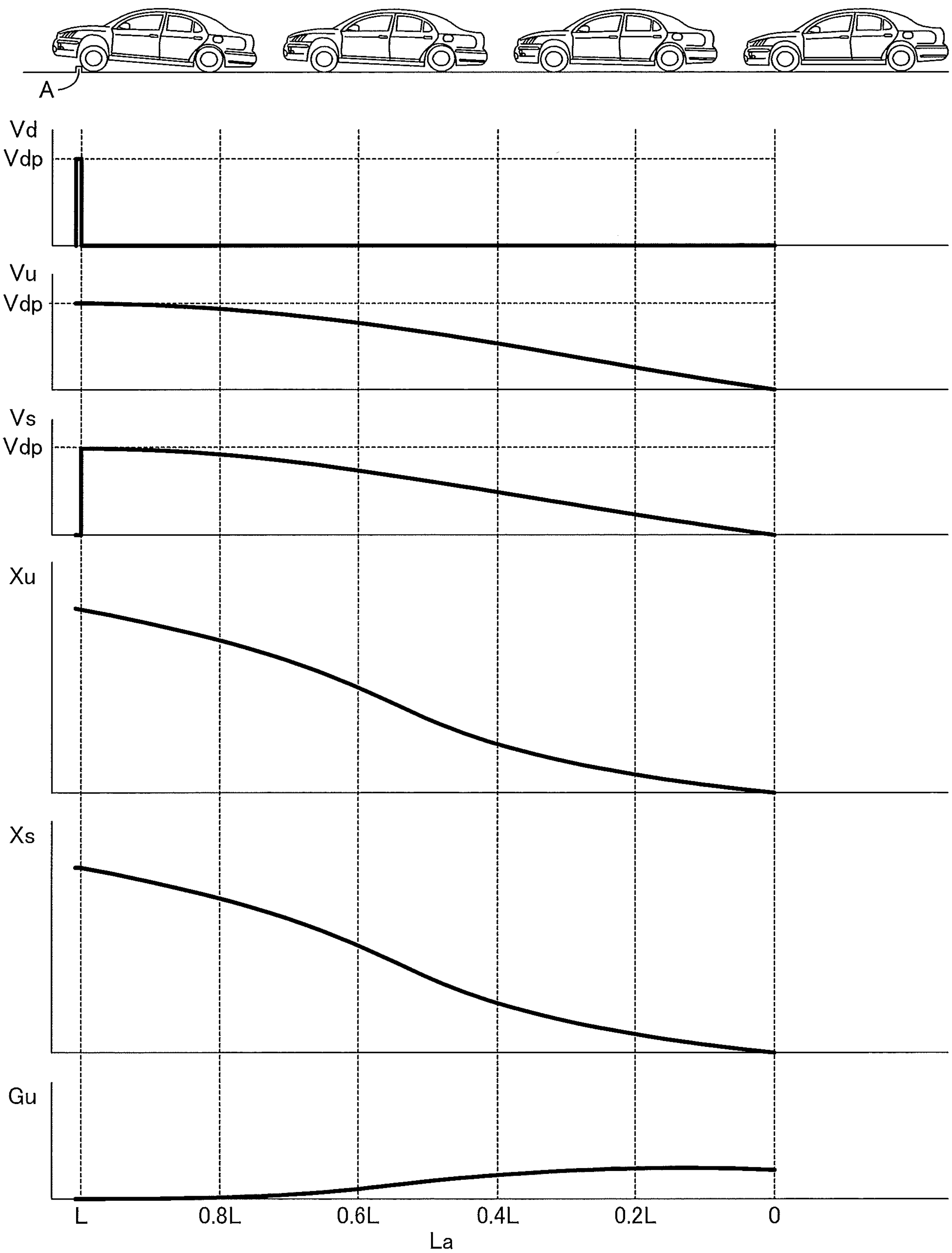

FIG.13

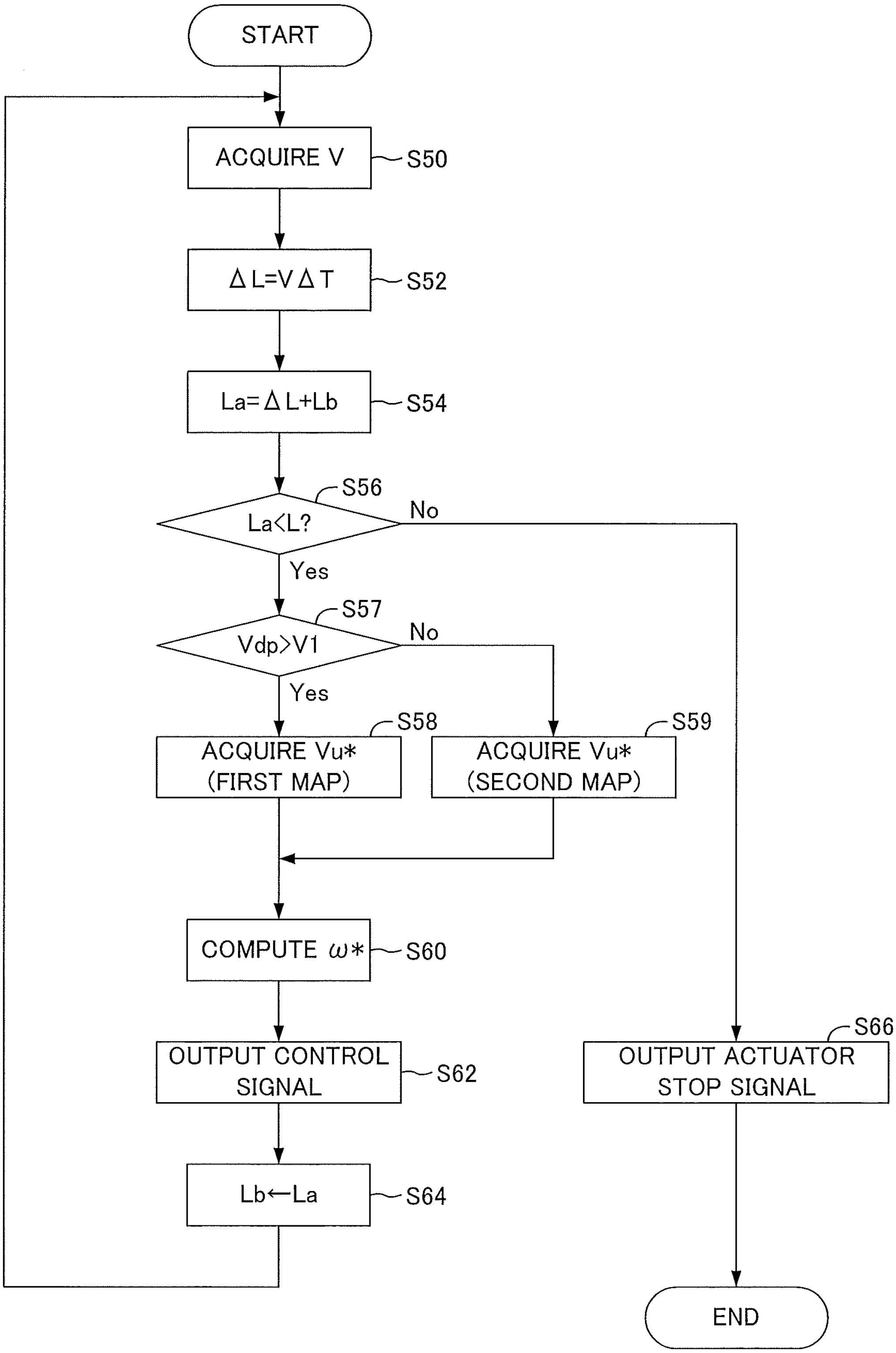
START
ACQUIRE V
S50
ΔL=VΔT
S52
La=ΔL+Lb
S54
S56
La<L?
No
Yes
S57
Vdp>V1
No
Yes
S58
ACQUIRE Vu*
(FIRST MAP)
S59
ACQUIRE Vu*
(SECOND MAP)
COMPUTE ω*
S60
OUTPUT CONTROL SIGNAL
S62
Lb←La
S64
S66
OUTPUT ACTUATOR STOP SIGNAL
END

FIG.14

FIRST MAP

| La | Vu* | La | Vu* |
|---|---|---|---|
| 0 | 0 | 0.5L | 0.50Vdp |
| ⋮ | ⋮ | ⋮ | ⋮ |
| 0.1L | −0.17Vdp | 0.6L | 0.71Vdp |
| ⋮ | ⋮ | ⋮ | ⋮ |
| 0.2L | −0.27Vdp | 0.7L | 0.89Vdp |
| ⋮ | ⋮ | ⋮ | ⋮ |
| 0.3L | −0.17Vdp | 0.8L | 0.95Vdp |
| ⋮ | ⋮ | ⋮ | ⋮ |
| 0.4L | 0.25Vdp | 0.9L | 0.99Vdp |
| ⋮ | ⋮ | ⋮ | ⋮ |

SECOND MAP

| La | Vu* | La | Vu* |
|---|---|---|---|
| 0 | 0 | 0.5L | 0.71Vdp |
| ⋮ | ⋮ | ⋮ | ⋮ |
| 0.1L | 0.16Vdp | 0.6L | 0.81Vdp |
| ⋮ | ⋮ | ⋮ | ⋮ |
| 0.2L | 0.31Vdp | 0.7L | 0.89Vdp |
| ⋮ | ⋮ | ⋮ | ⋮ |
| 0.3L | 0.45Vdp | 0.8L | 0.95Vdp |
| ⋮ | ⋮ | ⋮ | ⋮ |
| 0.4L | 0.59Vdp | 0.9L | 0.99Vdp |
| ⋮ | ⋮ | ⋮ | ⋮ |

FIG.15

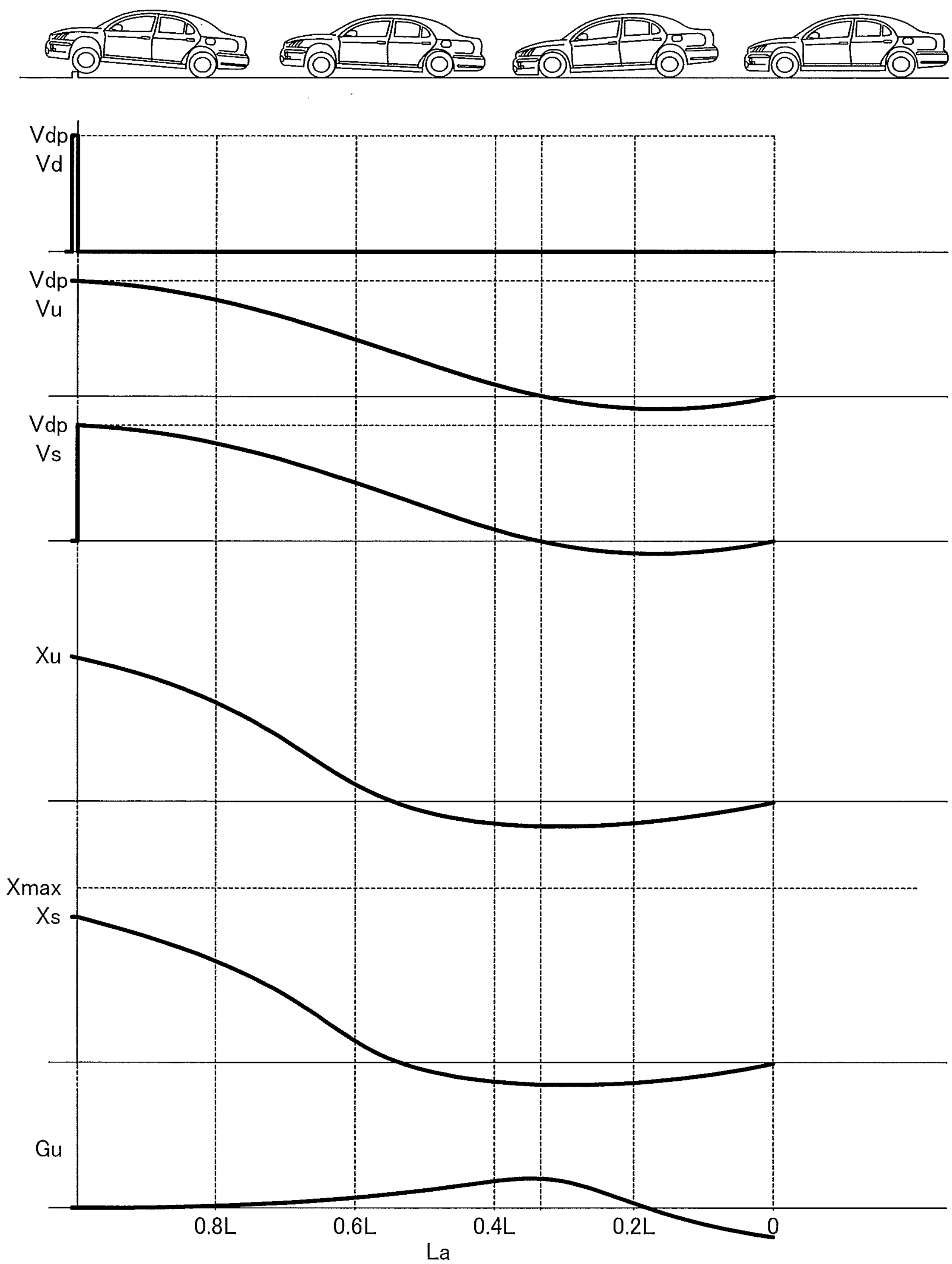

## INTERNATIONAL SEARCH REPORT

International application No.
PCT/JP2010/065634

A. CLASSIFICATION OF SUBJECT MATTER
*B60G17/0165*(2006.01)i, *B60G17/00*(2006.01)i

According to International Patent Classification (IPC) or to both national classification and IPC

B. FIELDS SEARCHED

Minimum documentation searched (classification system followed by classification symbols)
B60G17/0165, B60G17/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 6-24233 A (Nissan Motor Co., Ltd.), 01 February 1994 (01.02.1994), paragraphs [0041] to [0055]; fig. 8 to 9 (Family: none) | 1-8 |
| A | JP 2004-249976 A (Bose Corp.), 09 September 2004 (09.09.2004), fig. 5, 10A & US 2004/0251643 A1 & EP 1449688 A2 | 1-8 |
| A | JP 4-19214 A (Mitsubishi Motors Corp.), 23 January 1992 (23.01.1992), fig. 2, 6 to 7 (Family: none) | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>12 November, 2010 (12.11.10) | Date of mailing of the international search report<br>22 November, 2010 (22.11.10) |
| Name and mailing address of the ISA/<br>Japanese Patent Office<br>Facsimile No. | Authorized officer<br>Telephone No. |

Form PCT/ISA/210 (second sheet) (July 2009)

**INTERNATIONAL SEARCH REPORT**

International application No.
PCT/JP2010/065634

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-238238 A (Mitsubishi Motors Corp.), 17 September 1993 (17.09.1993), claim 1 (Family: none) | 1-8 |
| A | JP 11-42918 A (Nissan Motor Co., Ltd.), 16 February 1999 (16.02.1999), fig. 2, 5, 7, 10 (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H4254211 B
- JP H419214 B